(19) **Europäisches Patentamt / European Patent Office / Office européen des brevets**

(11) **EP 3 167 358 B1**

(12) **EUROPEAN PATENT SPECIFICATION**

(45) Date of publication and mention
of the grant of the patent:
**06.05.2020 Bulletin 2020/19**

(51) Int Cl.:
*G06F 3/0488* (2013.01)          *G06F 3/01* (2006.01)
*G06F 3/041* (2006.01)          *G06F 3/044* (2006.01)

(21) Application number: **15818851.6**

(22) Date of filing: **07.07.2015**

(86) International application number:
**PCT/KR2015/007020**

(87) International publication number:
**WO 2016/006918 (14.01.2016 Gazette 2016/02)**

(54) **METHOD OF PERFORMING A TOUCH ACTION IN A TOUCH SENSITIVE DEVICE**

VERFAHREN ZUR DURCHFÜHRUNG EINER BERÜHRUNGSAKTION BEI EINER BERÜHRUNGSEMPFINDLICHEN VORRICHTUNG

PROCÉDÉ D'EXÉCUTION D'UNE ACTION TACTILE DANS UN DISPOSITIF TACTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2014 IN 3353CH2014**
     **21.04.2015 IN 3353CH2014**
     **06.07.2015 KR 20150095954**

(43) Date of publication of application:
**17.05.2017 Bulletin 2017/20**

(73) Proprietor: **Samsung Electronics Co., Ltd.**
**Suwon-si, Gyeonggi-do 443-742 (KR)**

(72) Inventors:
• **DEOTALE, Gunjan P**
  **Bangalore 560037 (IN)**
• **VAISH, Rahul**
  **Karnataka 560037 (IN)**
• **BHUVANAGIRI, Sanjay Dixit**
  **Visakhapatnam**
  **Andra pradesh 530017 (IN)**
• **SULTHAR THAJUDEEN, Niyas Ahmed**
  **Bangalore 560077 (NA)**

• **POKHREL, Niroj**
  **Bangalore 560037 (IN)**
• **DWARAKA BHAMIDIPATI, Sreevatsa**
  **Bangalore 560037 (IN)**
• **KIM, Changjin**
  **Yongin-si**
  **Gyeonggi-do 446-715 (KR)**
• **KWON, Jungtae**
  **Suwon-si**
  **Gyeonggi-do443-740 (KR)**
• **KIM, Namyun**
  **Daegu 704-826 (KR)**

(74) Representative: **HGF Limited**
**Saviour House**
**9 St. Saviourgate**
**York YO1 8NQ (GB)**

(56) References cited:
**EP-A2- 2 602 696          WO-A1-2013/119476**
**US-A1- 2010 099 394          US-A1- 2010 211 920**
**US-A1- 2011 130 170          US-A1- 2013 194 235**
**US-A1- 2014 002 407          US-A1- 2014 146 000**

## Description

## Technical Field

The present disclosure relates to a touch screen. More particularly, the present disclosure relates to a method and system for identifying a gesture to enable one or more device specific actions in a touch screen enabled device.

## Background Art

Touch screens of different types of electronic devices enable a detection of coordinates of points of touch and perform a predefined action based on the detected coordinates. With a touch screen, a movement of an input pointer on a display can correspond to relative movements of a user's finger, as the user's finger is moved along a surface of the touch screen. Likewise, hand gestures have been implemented in touch screens, such that selections can be made when one or more taps are detected on a surface of the touch screen. In some cases, any portion of the touch screen can be tapped, and in other cases a dedicated portion of the touch screen can be tapped. In addition to making selections, scrolling can be initiated using a finger motion at an edge of the touch screen.

US Patent Application US 2010/0211920 A1 relates to detecting and interpreting real-world gestures and security gestures on touch and hover sensitive devices. Real-world gestures in this context refer to gestures that are recognised to mean certain things. Examples disclosed are "OK" hand gestures, "grasp everything" gestures and "stamp of approval" gestures. The "stamp of approval" gesture is formed by a hand detected by a touch or hover sensitive device and interpreted to perform an operation relating to a confirmation or affirmation of an action. Features are first identified and classified as finger, thumb or palm, and then grouped based on certain criteria. The grouping can then be used to perform a task (a touch action event). A filtering step is disclosed that, based on predefined criteria, can be used to reject features. The rejected features are not considered part of the touch event being processed.

## Disclosure of Invention

## Technical Problem

Recently, more advanced gestures have been implemented. For example, scrolling can be initiated by placing four fingers on the touch screen so that the scrolling gesture is recognized, and thereafter moving the four fingers on the touch screen performs scrolling events. Methods for implementing these advanced gestures, however, can be limited and in many instances counterintuitive. In certain applications, it can be beneficial to enable a user to use "real-world" gestures such as hand movements and/or finger orientations that can be generally recognized to mean certain things, so as to more efficiently and accurately perform intended operations. However, there are requirements of pre-learning or training of a model for different types of inputs in order to enable specific shape and gesture interactions. This pre-learning or training occupies storage of the device that includes the touchscreen.

Therefore, there is a need for an efficient and faster method and system for identifying touch inputs on a touch screen. More specifically, there is a need for a method and a system for recognizing touch inputs received when a touch enabled screen is in a switched off state.

The above information is presented as background information only to assist with an understanding of the present disclosure. No determination has been made, and no assertion is made, as to whether any of the above might be applicable as prior art with regard to the present disclosure.

## Solution to Problem

Aspects of the present disclosure are to address at least the above-mentioned problems and/or disadvantages and to provide at least the advantages described below. Accordingly, an aspect of the present disclosure is to provide a method of identifying gesture to enable device specific actions in touch screen enabled devices using one or more parameters. The gesture can be a mere hand shape or a touch pattern.

Another aspect of the present disclosure is to enable a device application when the screen of the touch sensitive device is in a screen-off state. Consider that a user swipes across the screen in the screen-off state to open front camera for a shot. When a user performs a touch gesture using two thumbs in the screen-off state, the camera application is automatically launched.

The invention is set out in the appended claims. The references to embodiments in the description falling outside the scope of the appended claims are to be understood as mere examples which are useful for understanding the invention.

In accordance with an aspect of the present disclosure, there is provided a method of performing a touch action in a touch sensitive device, the method comprising: sensing at least one touch input provided on a touch screen of the touch sensitive device; identifying a shape of a contact area associated with the at least one touch input provided on the touch screen based on one or more predefined parameters; determining a touch action corresponding to the identified shape; and performing the determined touch action, wherein the at least one touch input is sensed when a display panel of the touch sensitive device is in a screen-off state, and wherein the one or more predefined parameters comprise one or more of a right-left slant length of a region, a left-right slant length of a region, a number of touch points enclosed in a region, a hypotenuse of a region, a rectangularity of a region, and an elongatedness of a region, the method further comprising identifying an orientation of the shape of the contact area associated with the at least one touch input provided on the touch screen, wherein the orientation of the identified shape is determined according to an average angle method comprising: computing a set of a plurality of angles formed by lines joining boundary points to other boundary points where a distance between the joined boundary points is greater than or equal to a certain computed length; and determining an average of the computed set of the plurality of angles to determine the orientation of the identified shape.

In accordance with another aspect of the present disclosure, there is provided a touch sensitive device performing a touch action comprising: a memory configured to store one or more predefined parameters; a touch screen configured to sense at least one touch input; and a processor configured to: sense the at least one touch input provided on the touch screen, identify a shape of a contact area associated with the at least one touch input based on the one or more predefined parameters, determine a touch action corresponding to the identified shape, and perform the determined touch action, wherein the at least one touch input is sensed when a display panel of the touch sensitive device is in a screen-off state, wherein the one or more predefined parameters comprise one or more of a right-left slant length of a region, a left-right slant length of a region, a number of touch points enclosed in a region, a hypotenuse of a region, a rectangularity of a region, and an elongatedness of a region, wherein the processor is further configured to identify an orientation of the shape of the contact area associated with the at least one touch input provided on the touch screen, and wherein the processor is further configured to determine the orientation of the identified shape according to an average angle method comprising: computing a set of a plurality of angles formed by lines joining boundary points to other boundary points where a distance between the joined boundary points is greater than or equal to a certain computed length; and determining an average of the computed set of the plurality of angles to determine the orientation of the identified shape.

Other aspects, advantages, and salient features of the disclosure will become apparent to those skilled in the art from the following detailed description, which, taken in conjunction with the annexed drawings, discloses various embodiments of the present disclosure.

## Advantageous Effects of Invention

The present disclosure can identify gesture to enable device specific actions in touch screen enabled devices using one or more parameters. The gesture can be a mere hand shape or a touch pattern. The present disclosure can perform a function based on the gesture.

So, the present disclosure can increase user conveniences.

## Brief Description of Drawings

The above and other aspects. features, and advantages of certain embodiments of the present disclosure will be more apparent from the following description taken in conjunction with the accompanying drawings, in which:

FIG. 1 is a flow chart illustrating a method of recognizing a hand shape for performing a touch action in a touch sensitive device according to an embodiment of the present disclosure;
FIG. 2 is a flow chart illustrating a method of processing mutual capacitance data and computing parameters according to an embodiment of the present disclosure;
FIG. 3 is a flow chart illustrating a method of data binarization according to an embodiment of the present disclosure;
FIG. 4A is a flow chart illustrating a method of region identification according to an embodiment of the present disclosure;
FIG. 4B is a flow chart illustrating a method of modifying wrongly interpreted region values in a process of region identification according to an embodiment of the present disclosure;
FIG. 5 is a schematic representation of determining an orientation of a shape using an average angle method according to an embodiment of the present disclosure;
FIG. 6 is a flow chart illustrating a method of identifying various parts of a hand and separating joined fingers according to an embodiment of the present disclosure;
FIG. 7A is a flow chart illustrating a method of identifying a fist according to an embodiment of the present disclosure;
FIG. 7B is a schematic representation of a shape of a fist along with a few parameters such as height, width, left to right length and right to left length according to an embodiment of the present disclosure;
FIG. 8A is a flow chart illustrating a method of identifying a finger according to an embodiment of the present disclosure;
FIG. 8B is a schematic representation of various parameters such as height, width, left to right diagonal length and right to left diagonal length corresponding to a shape of a finger according to an embodiment of the present disclosure;
FIG. 9A is a flow chart illustrating a method of separating/differentiating a finger from a palm according to an embodiment of the present disclosure;
FIG. 9B is a schematic representation of various operations present in separating a finger from a palm to an embodiment of the present disclosure;

FIG. 10 is a flow chart illustrating a method of storing shapes according to an embodiment of the present;

FIG. 11 is a flow chart illustrating a method of shape matching using a calculated parameter and recorded parameters according to an embodiment of the present disclosure;

FIG. 12A is a schematic representation of launching a camera using a single finger shape identification according to an embodiment of the present disclosure;

FIG. 12B is a flow chart illustrating a method of launching a camera using a single finger shape identification according to an embodiment of the present disclosure;

FIG. 13 is a schematic representation of launching a camera using double finger shape identification according to an embodiment of the present disclosure;

FIG. 14 is a flow chart illustrating a method of performing a touch action in a touch-sensitive device according to an embodiment of the present disclosure;

FIG. 15 is a flow chart illustrating a method of computing parameters and linearizing a gesture performed by a user according to an embodiment of the present disclosure;

FIGS. 16A and 16B are schematic representations of computing directions according to various embodiments of the present disclosure;

FIG. 17A is a flow chart illustrating a method of computing one or more parameters for matching according to an embodiment of the present disclosure;

FIG. 17B is a flow chart illustrating a method of processing one or more coordinates collected in a touch sensor panel integrated circuit (TSP IC) according to an embodiment of the present disclosure;

FIG. 17C is a flow chart illustrating a method of matching a gesture performed by a user with a registered gesture according to an embodiment of the present disclosure;

FIG. 18A is a flow chart illustrating a method of computing a pressure vertex and a direction vertex for determining a gesture performed by a user according to an embodiment of the present disclosure;

FIG. 18B is a flow chart illustrating a method of matching a gesture performed by a user with a registered gesture according to an embodiment of the present disclosure;

FIG. 19 is a flow chart illustrating a method of registering one or more gestures with a touch sensitive device according to an embodiment of the present disclosure;

FIG. 20 is a schematic representation of launching a camera using a single finger gesture identification according to an embodiment of the present disclosure;

FIG. 21A is a schematic representation of launching a camera using double finger gesture identification according to an embodiment of the present disclosure;

FIG. 21B is a flow chart illustrating a method of launching a camera using double finger gesture identification according to an embodiment of the present disclosure; and

FIG. 22 is a schematic representation of launching various touch actions based on shape identification according to an embodiment of the present disclosure.

The same reference numerals are used to represent the same elements throughout the drawings.

## Mode for the Invention

The following description with reference to the accompanying drawings is provided to assist in a comprehensive understanding of various embodiments of the present disclosure. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure.

It is to be understood that the singular forms "a", "an" and "the" include the plural referents unless the context clearly dictates otherwise. Thus, for example, reference to "a component surface" includes reference to one or more of such surfaces.

It will be further understood that the terms "includes," "comprises," "including" and/or "comprising," when used in this specification, specify the presence of stated features, integers, operations, elements and/or components, but do not preclude the presence or addition of one or more other features, integers, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include operatively connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

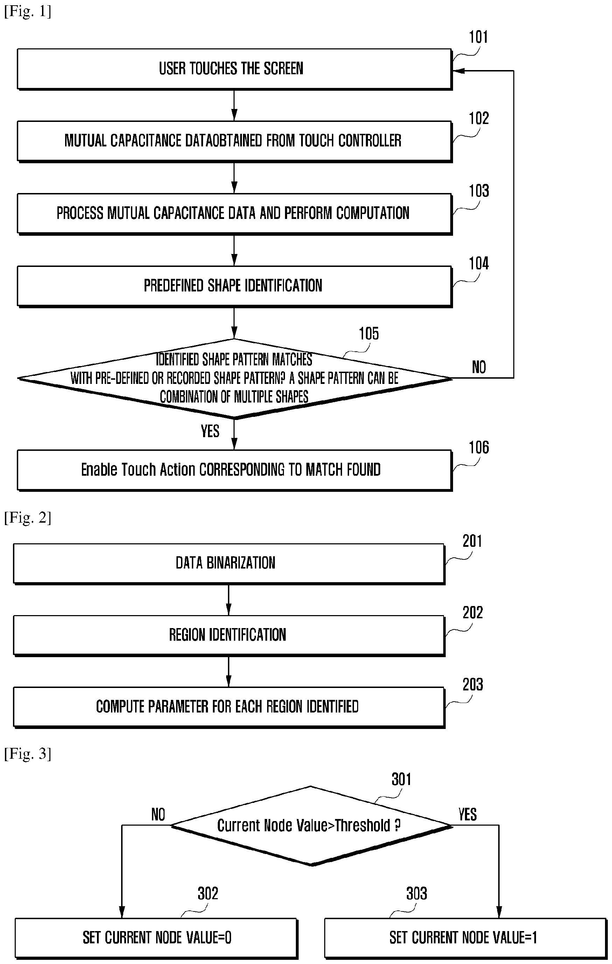

FIGS. 1 through 22, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element

FIG. 1 is a flow chart illustrating a method of recognizing a hand shape for performing a touch action in a touch sensitive device according to an embodiment of the present disclosure.

Referring to FIG. 1, when a user touches a screen at operation 101, mutual capacitance changes and the change in the mutual capacitance is detected by a touch sensor panel integrated circuit (TSP IC) (i.e. a touch controller) at operation 102. A shape of a touch area is considered as a region.

The detected mutual capacitance data for the region is processed at operation 103 and set of parameters are calculated.

Based on the calculated parameters, the shape is identified at operation 104.

If the identified shape matches with predefined or prerecorded shapes in the touch sensitive device at operation 105, then the shape pattern can have combination of multiple shapes, and at operation 106, a touch action corresponding to the identified shape is enabled in the touch sensitive device. In an embodiment of the present disclosure, the touch action is enabled even when the display panel of the touch sensitive device is in a screen-off state. If the identified shape does not match the predefined or prerecorded shapes in operation 105, then the method returns to operation 101.

The set of parameters according to an embodiment of the present disclosure comprises one or more of an area of a region, a width of a region, a height of a region, a right-left slant length of a region, a left-right slant length of a region, a number of touch nodes enclosed in a region, a hypotenuse of a region, a rectangularity of a region, an elongatedness of a region and an average angle of a region.

In an embodiment of the present disclosure, the region is identified based on detecting a change in the mutual capacitance in the touch screen. The mutual capacitance data is processed and the one or more parameters are defined based on the identified one or more touch regions. The method of processing the mutual capacitance data is explained in detail in FIG. 2. Once the parameters are identified, the value of each of the defined parameters are determined for the identified one or more touch regions. The shape of the region is identified based on the determined values of the defined parameters.

In an embodiment of the present disclosure, the touch action is enabled even when the display panel of the touch sensitive device is in the screen-off state. For instance, consider that a user swipes across the screen when the screen is in the screen-off state, to open front camera for a selfie shot. When a user performs a touch gesture using two thumbs in the screen-off state, a camera application is automatically launched. In the screen-off state of the touch screen device, the user positions their fingers to make different shapes to trigger a corresponding operation. The touch screen device recognizes the touch gestures in the screen-off state by identifying hand/finger shapes using a non-model based approach. Likewise, when a user performs a pinch out gesture in the screen-off state, a pinched-out portion of the screen displays the time and missed call notifications. When a user performs a small swipe gesture using one finger on any portion of the screen in screen-off state without lifting their finger, shortcuts for different applications will be displayed. In the screen-off state, the TSP IC may be operated in a low power mode. In an example, the low power mode may be achieved by decreasing a frequency of operation of the TSP IC.

FIG. 2 is a flow chart illustrating a method of processing mutual capacitance data and computing of parameters according to an embodiment of the present disclosure.

Referring to FIG. 2, in order to identify a shape of a contact area, mutual capacitance data is processed. The processing includes filtering of mutual capacitance data using a binarization method as indicated in operation 201. The method of data binarization is explained in detail in FIG. 3.

Further, one or more touch regions on the touch screen are identified using a region identification method at operation 202.

Additionally, the parameters are computed for each identified region in operation 203.

FIG. 3 is a flow chart illustrating a method of data binarization according to an embodiment of the present disclosure.

Referring to FIG. 3, according to an embodiment of the present disclosure, a coupling capacity of two-crossing conductor/electrodes of a path of touch sensor panel is considered as node. A change in mutual capacitance at each of the nodes is calculated. A predefined threshold value is selected for performing data binarization.

Further, as indicated in operation 301, the change in mutual capacitance at the current node is compared with the predefined threshold value of the mutual capacitance. If the mutual capacitance value of the current node is greater than the predefined threshold, the mutual capacitance value of the current node is set as 1 at operation 303. If the mutual capacitance value of the current node is less than the predefined threshold, the mutual capacitance value of the current node is set as 0 at operation 302.

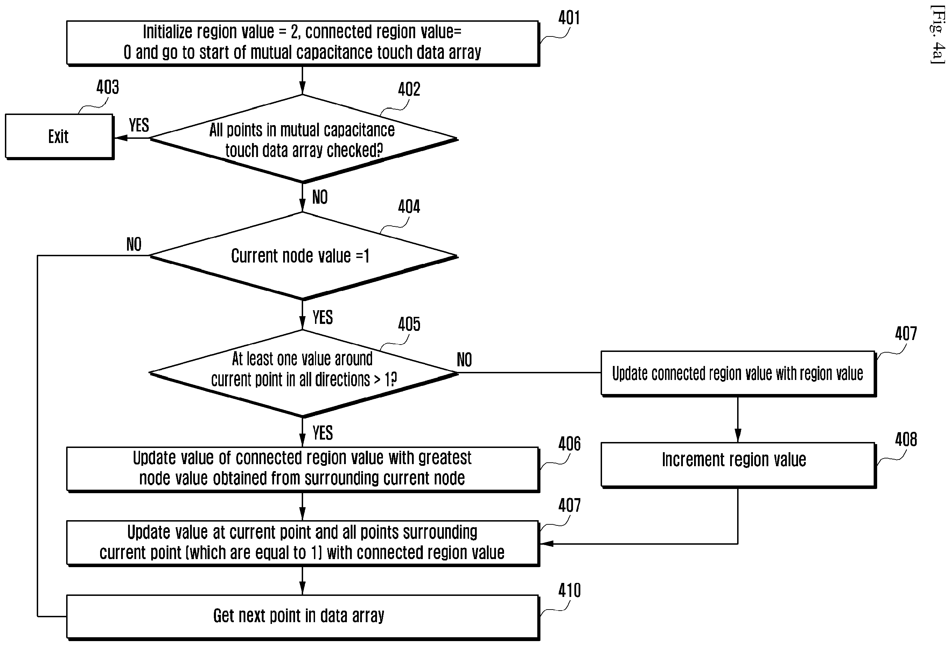

FIG. 4A is a flow chart illustrating a method of region identification according to an embodiment of the present disclosure.

Referring to FIG. 4A, in the present disclosure, an identification of a touch region is performed using a mutual capacitance touch data array. The mutual capacitance touch data array is formed using binarized data.

In order to identify the region of touch, the following initial conditions are given at operation 401.

    Initialize region value = 2
    Connected region value = 0

Go to start of mutual capacitance touch data array.

At operation 402, it is determined whether all the nodes in the mutual capacitance touch data array are checked. The nodes are also referred as points.

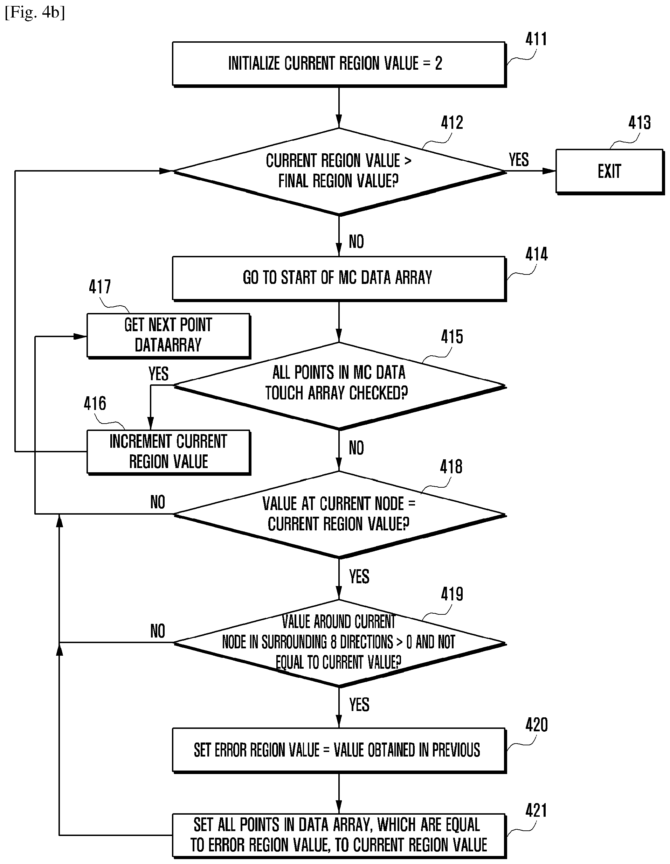

If all of the nodes in the mutual capacitance touch data array are checked in operation 403, then the process of identifying the region terminates as shown in operation 403, and control flow is transferred to the flow chart illustrated in FIG. 4B.

If all of the nodes in the mutual capacitance touch data array are not checked, then at operation 404, it is determined whether a current value of the node is 1. If the current value of mutual capacitance of the node is not 1, then the method proceeds to operation 410, which is described below in more detail.

However, if the current value of mutual capacitance of the node is 1, then it is determined whether at least one value around the current node in all eight directions is greater than one, at operation 405.

If there exists one or more nodes having a mutual capacitance value greater than one in operation 405, then the connected region value is updated with the greatest node value obtained from a surrounding current node at operation 406.

Likewise, at operation 407, the current node value and all the nodes surrounding the current node are updated by the updated connected region value.

If, in operation 405, there are no surrounding nodes having a mutual capacitance value greater than 1, then the connected region value is updated with the initial region value as indicated in operation 407.

Further, the region value is incremented in operation 408 and the control flow is directed towards operation 407. Upon completion of updating the connected region value in operation 407, a next node in the mutual capacitance data array is selected at operation 410.

FIG. 4B is a flow chart illustrating a method of modifying wrongly interpreted region values in a process of region identification according to an embodiment of the present disclosure.

Referring to FIG. 4B, in order to rectify a wrong interpretation of region values, an initial value of a current region is set as 2 at operation 411.

Further, if it is determined that the current region value is greater than the final region value at operation 412, then the process is terminated as indicated in operation 413.

If the current region value is less than the final region value, then the control flow is transferred to the beginning of the mutual capacitance data array at operation 414.

Likewise, at operation 415, it is determined whether all nodes in the mutual capacitance data array are checked. If all nodes in the mutual capacitance data array are checked, then at operation 416, the current region value is incremented and the process returns to operation 412.

If all nodes in the mutual capacitance data array are not checked in operation 415, then it is determined whether the value of the mutual capacitance at the current node is equal to the current region value at operation 418. If the value of the mutual capacitance at the current node is equal to the current region, then it is determined whether the value around current node in surrounding 8 directions is greater than zero and not equal to current region value in operation 419.

If yes, in operation 419, then an error region value is set as a value obtained in the previous processing at operation 420. Consequently, at operation 421, the all nodes in the mutual capacitance data array that are equal to error region value are set as current region value.

If the value of the mutual capacitance at the current node is not equal to the current region value at operation 418 and if no at operation 419, then the process proceeds to operation 417 to get a next point of the mutual capacitance data array. Further, after operation 421, the process proceeds to operation 417.

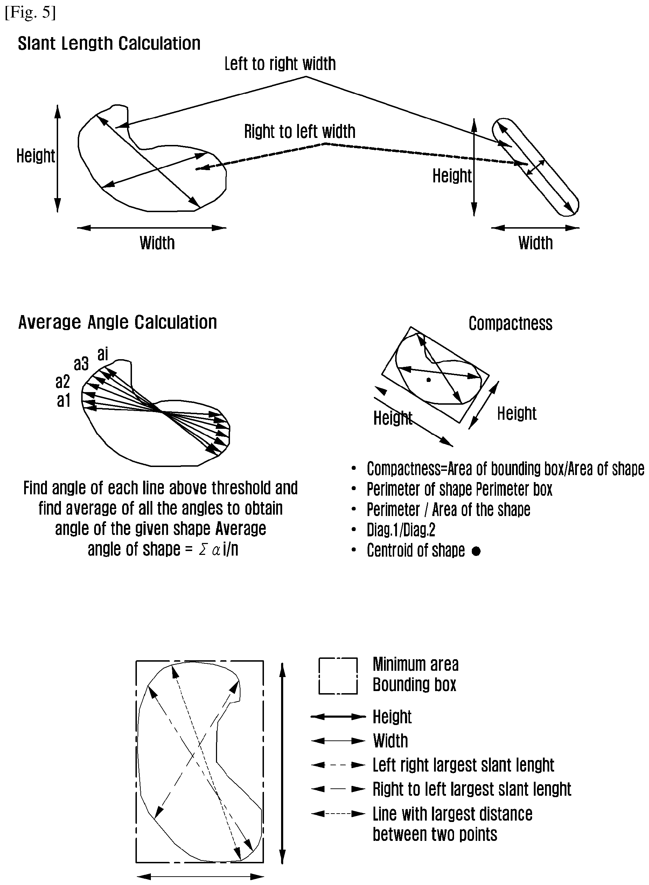

FIG. 5 illustrates a schematic representation of determining an orientation of a shape using an average angle method according to an embodiment of the present disclosure.

Referring to FIG. 5, the various parameters to be calculated in order to determine a shape of a touch region are one or more of an area of a region, a width of a region, a height of a region, a right-left slant length of a region, a left-right slant length of a region, a number of touch nodes enclosed in a region, a hypotenuse of a region, a rectangularity of a region, an elongatedness of a region and an average angle of a region.

In order to find a minimum bounding rectangle, a method for calculating a bounding box is used.

The area of the bounding box = (Width X Height) of the bounding box.

Perimeter of the bounding box = 2X(Width + Height) of the bounding box.

Centroid of shape(x,y) =($\sum$xi/n, $\sum$yi/n), where i $\varepsilon$ [1,n], n is total number of points detected.

xi: x coordinates of points inside the shape.

yi: y coordinates of points inside the shape

Area of shape = Total number of points touched inside the shape.

Perimeter of shape = Total number of points covered on border of shape.

In order to identify the orientation of the shape average angle method is used. According to an embodiment of the present disclosure, straight lines are drawn inside the shape at different angles and each line above threshold and then find average of all the angles.

The average angle method (the angle of line)

$$\alpha i \tan^{-1}\left(\frac{y2\text{-}y1}{x2\text{-}x1}\right)\dots\text{Equation 1}$$

Average angle of shape = $\sum\alpha$i/n, where i $\varepsilon$ [1,n], n is total number of points detected

The operations involved in determining left to right width:

> Operation 1: find the point of shape closest to left-top point of the bounding box
> Operation 2: find the point of shape closest to right-bottom point of the bounding box
> Operation 3: Count all the points lying on the line joining the points mentioned in operations 1 and 2.

The operations involved in determining right to left width.

Operation 1: find the point of shape closest to right-top point of the bounding box

Operation 2: find the point of shape closest to left-bottom point of the bounding box

Operation 3: Count all the points lying on the line joining the points mentioned in operations 1 and 2.

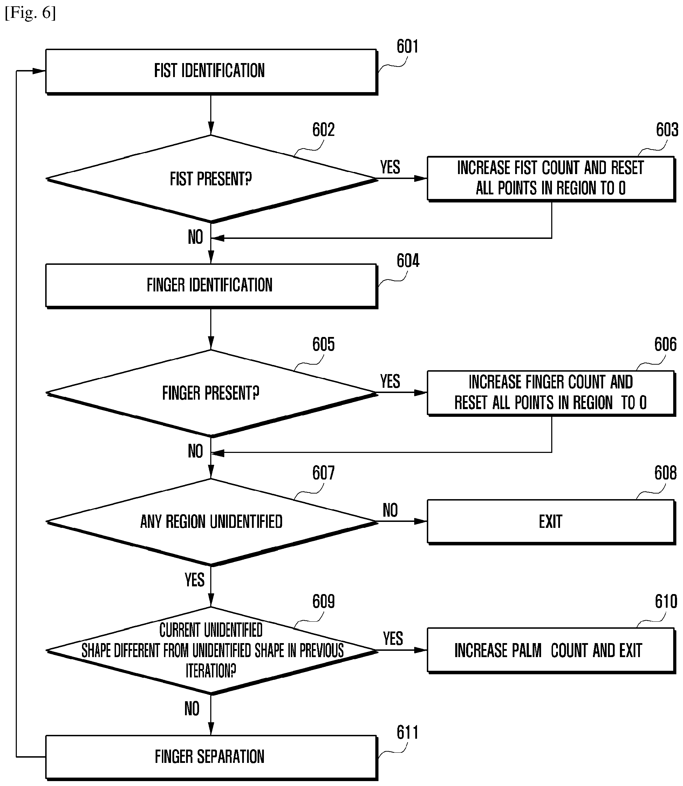

FIG. 6 is a flow chart illustrating a method of identifying various parts of a hand and separating joined fingers according to an embodiment of the present disclosure.

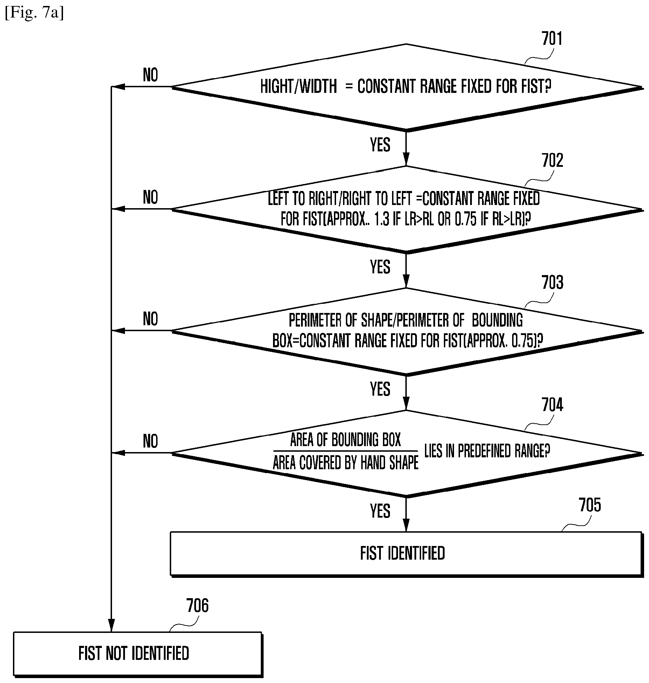

Referring to FIG. 6, in an embodiment of the present disclosure, a fist identification is performed at operation 601. A method of identifying the fist is explained in detail in FIG. 7A.

Further, at operation 602 it is determined that whether the fist is present in the touch region. If the fist is present in the touch region, then the fist count is increased and all points in identified region are reset to 0 at operation 603.

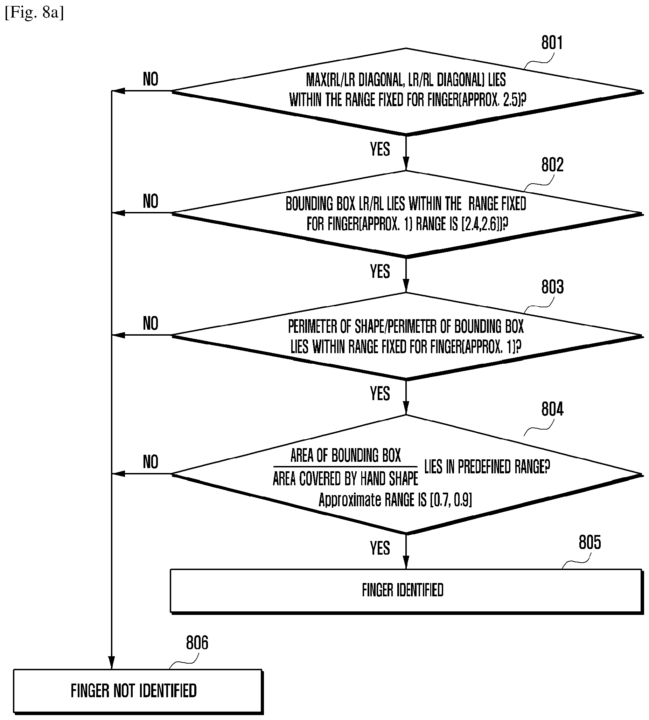

If the fist is not identified in the touch region in operation 602, then finger identification is performed at operation 604. The method of identifying a finger is explained in detail in FIG. 8A.

If the finger is present in the touch region in operation 605, then a finger count is incremented and all the point present in the touch region are rest to 0 at operation 606.

If the finger is not present in the touch region in operation 605, then it is determined whether any undefined region is present in the touch region in operation 607.

If no undefined region is present in the touch region, then the process terminates at operation 608.

If the at least one undefined region is detected in operation 607, then it is determined whether the current unidentified shape is different from an unidentified shape of a previous iteration at operation 609.

If the current unidentified shape is not matching the unidentified shape of the previous iteration, then the palm count is increased and the process terminated as indicated in operation 610.

If the current in the identified shape matches the unidentified shape of the previous iteration at operation 609, then at operation 611, the finger identification is performed.

FIG. 7A is a flow chart illustrating a method of identifying a fist according to an embodiment of the present disclosure.

Referring to FIG. 7A, in order to identify a fist, parameters such as a height to width ratio, left to right length, and a perimeter of a bounding box are used. A predefined range is set for each of the parameters.

According to an embodiment of the present disclosure, at operation 701, a height to width ratio is calculated. In order to identify a shape of a fist, the height to width ratio must be within a constant range. In an embodiment of the present disclosure, the ideal height to width ratio is approximately 3.

If the height to width ratio falls in a predefined ratio, then a left to right ratio and a right to left ratio are calculated at operation 702. Further it is determined that the left to right length and right to left length fall within a predefined range (approximately 1.3 if LR>RL or 0.75 if RL>LR) at operation 702.

Then the perimeter of shape or perimeter of bounding box is determined at operation 703. If the perimeter of shape or perimeter of bounding box falls in a constant range fixed for fist (approximately 0.75) in operation 703, then the area of the bounding box and the area cover by the hand shape are computed at operation 704.

Further, at operation 704, a ratio of the area of the bounding box and the area covered by the hand shape is computed. If the computed ratio falls within a predefined range, then the fist is identified at operation 705. The fist is not identified in operation 706, if any of the above calculated parameters do not fall in the predefined range (i.e., no at operations 701, 702, 703 or 704). The predefined ranges are set based on a study conducted on hands of various people to identify possible measures of fist.

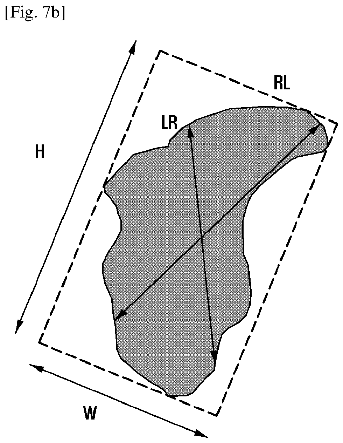

FIG. 7B is a schematic representation of a shape of a fist along with a few parameters such as height, width, left to right length and right to left length according to an embodiment of the present disclosure.

Referring to FIG. 7B, a height (H) of a fist, a width (W) of the fist, a left to right length (LR) of the fist and a right to left length (RL) of the fist are illustrated.

FIG. 8A is a flow chart illustrating a method of identifying a finger according to an embodiment of the present disclosure.

Referring to FIG. 8A, in an embodiment of the present disclosure, a right to left diagonal length, and a left to right diagonal length of a hand shape are computed to identify a finger.

At operation 801, it is determined whether a maximum of the left to right diagonal length and the right to left diagonal length falls within a predefined range that is fixed for a finger. In an embodiment of the present disclosure, the predefined range is 2.5.

If the maximum of the left to right diagonal length and the right to left diagonal length falls within the predefined range at operation 802, then at operation 803, a perimeter of a shape or a perimeter of a bounding box is computed and it is determined whether the perimeter of the shape or the perimeter of the bounding box lies within a range fixed for a finger. In an embodiment of the present disclosure, the approximate range is set as approximately 1.

Further, at operation 804, a ratio between the area of bounding box and the area covered by the finger region is calculated. If the ratio falls between predefined ranges, then the finger is identified at operation 805. In an embodiment of the present disclosure, the predefined range of ratio between the area of bounding box and area covered by the finger region is set approximately as 0.7 to 0.9. In case any of the above mentioned ratio of parameters do not fall within the corresponding predefined ratio (i.e., no at operations 810, 802, 803 or 804), then the process terminates without identifying the finger, as indicated in operation 806.

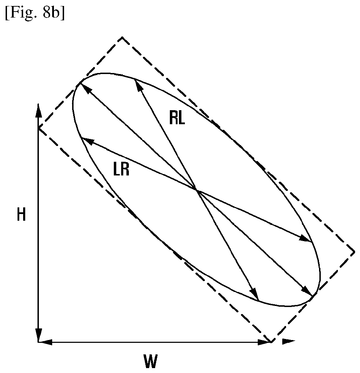

FIG. 8B is a schematic representation of various parameters such as height, width, left to right diagonal length and right to left diagonal length corresponding to a shape of a finger according to an embodiment of the present disclosure.

Referring to FIG. 8B, a height (H) of a shape of a finger, a width (W) of the shape of the finger, a left to right diagonal length (LR) of the shape of the finder and a right to left diagonal length (RL) of the shape of the finger are illustrated.

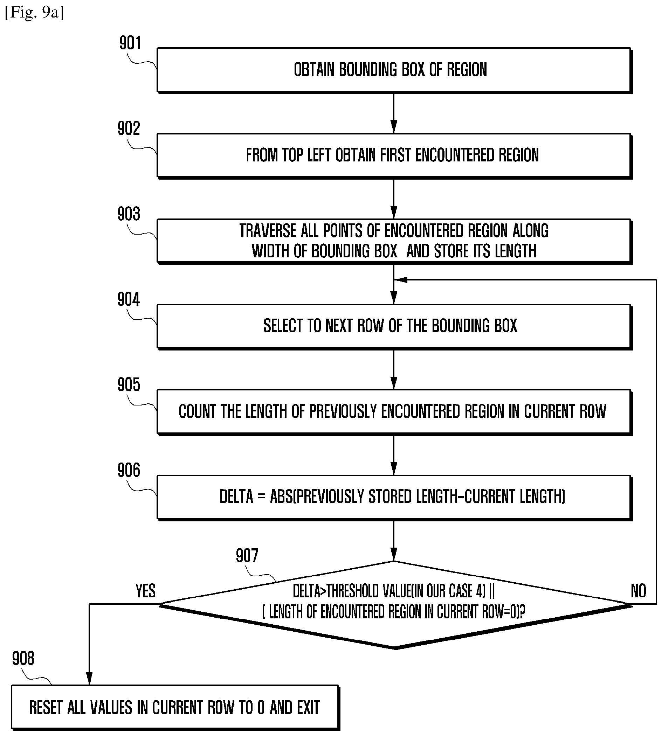

FIG. 9A illustrates a flow chart of a method of separating/differentiating a finger from a palm according to an embodiment of the present disclosure.

Referring to FIG. 9A, in an embodiment of the present disclosure, at operation 901, a bounding box for the touch region is obtained.

At operation 902, a first encountered region from top left is obtained. The first encountered region in view of the present embodiment may be a left most finger.

Further, traversing all points of the encountered region along a width of the bounding box and storing its length are performed at operation 903.

Then at operation 904, a next row of the bounding box is selected.

Further, a count of length of a previously encountered region in a current row is performed at operation 905.

Then an absolute value of a difference between the previously stored length and the length of the current region is calculated, at operation 906, where the difference is referred as delta.

At operation 907, it is determined whether the delta value is greater than a predefined threshold value. In an embodiment of the present disclosure, the predefined threshold is set as 4. In parallel, the length of encountered region in the current row is set as zero. If the value of delta is less than the predefined threshold, then control flow transfers to operation 904, for selecting the next row of the bounding box. If the value of delta is higher than the predefined threshold value, then at operation 908, all values in the current row are reset to zero and the process terminates.

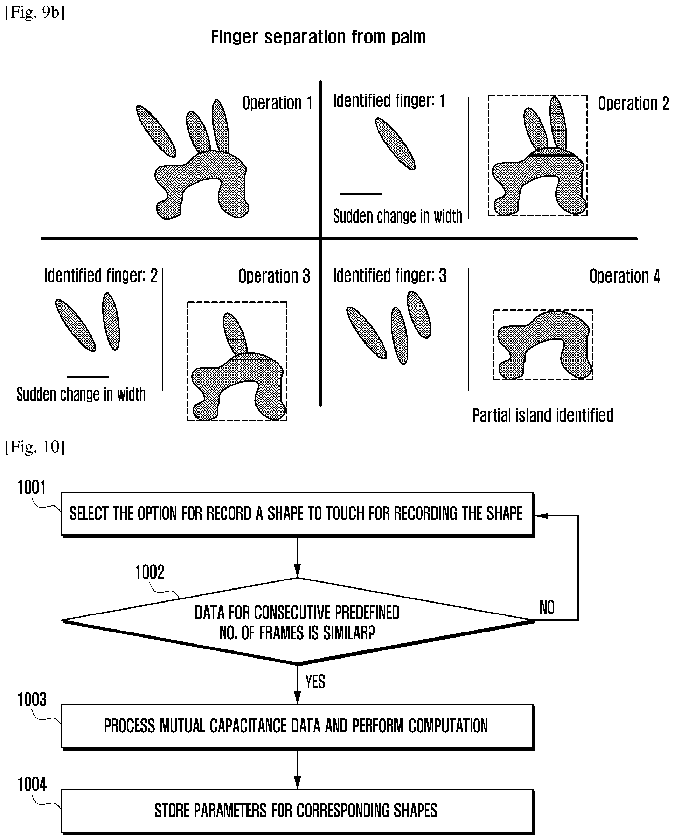

FIG. 9B is a schematic representation of various operations present in separating a finger from ta palm according to an embodiment of the present disclosure.

Referring to FIG. 9B, at operation 1, a finger is separated from a palm. Likewise, a bounding box is created for the rest of the touch region at operations 2 and 3 and each of the finger and palm are identified at operation 4.

FIG. 10 is a flow chart illustrating a method of storing shapes according to an embodiment of the present disclosure.

Referring to FIG. 10, a method to record one or more shapes in a touch sensitive device for reference a user's needs to select an option to record a shape is illustrated. According to an embodiment of the present disclosure, a blank area is provided in the touch sensitive device for providing an input for recording a gesture using a hand shape at operation 1001. The user needs to repeat the same gesture multiple times for recording minor deviations present in the hand shape while providing the touch input. Each of the touch input frames are stored in the touch sensitive device memory.

If data for a consecutive predefined number of frames is similar at operation 1002, then at operation 1003, mutual capacitance of the data is processed. Further, in operation 1003, the parameters are computed for the shape.

If the data for the consecutive predefined number of frames is not similar in operation 1002, then the method returns to operation 1001.

Once the hand shape is validated and parameters are computed, the parameters and corresponding shapes are stored in the touch sensitive device in operation 1004.

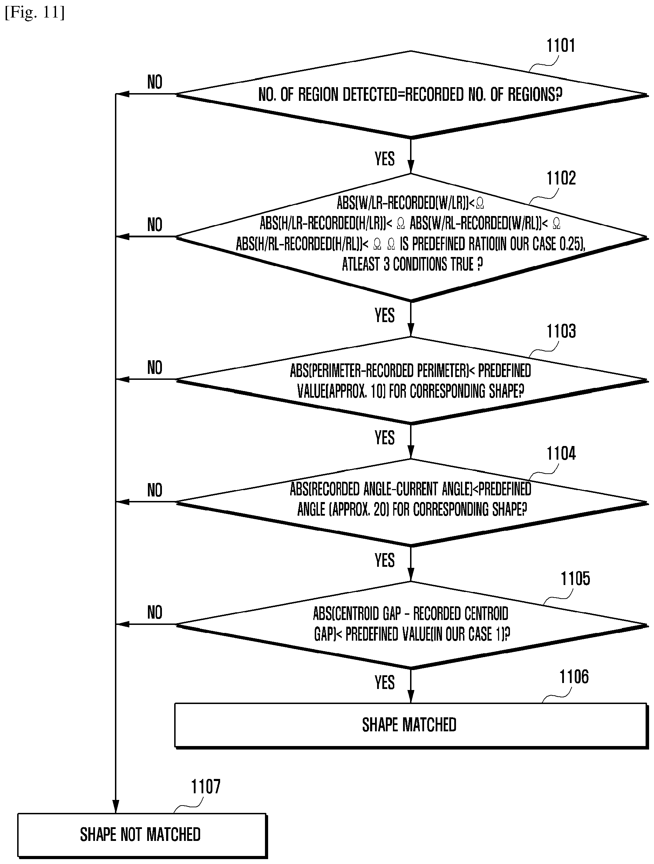

FIG. 11 is a flow chart illustrating a method of shape matching using a calculated parameter and recorded parameters according to an embodiment of the present disclosure.

Referring to FIG. 11, in order to perform shape matching, at operation 1101, it is determined whether a number of regions detected is equal to a number of recorded regions.

If the number of region detected is equal to the number of recorded region, then, in operation 1102 the following absolute values are computed and compared with a predefined ratio ($\Omega$).

$$\text{ABS(W/LR-RECORDED(W/LR))} < \Omega$$

$$\text{ABS(H/LR-RECORDED(H/LR))} < \Omega$$

$$\text{ABS(W/RL-RECORDED(W/RL))} < \Omega$$

$$\text{ABS(H/RL-RECORDED(H/RL))} < \Omega$$

where, W is the width of the shape, H is the height of the shape, LR is the left to right length of the shape and RL is the right to left length of the shape.

According to an embodiment of the present disclosure, an approximate value of the predefined value ($\Omega$) falls within 0.25. If the value of $\Omega$ is within the range of 0.25 for at least three conditions as mentioned above, the further comparisons are performed to determine the match from the recorded shapes.

At operation 1103, a difference between a value of a perimeter of the touch shape and the recorded perimeter is computed. Further, an absolute value of the computed difference is compared with a predefined value for corresponding shape. In an embodiment of the present disclosure, the predefined value is approximately 10.

If the computed value is less than the predefined value, then at operation 1104 a difference between a recorded angle and a current angle is determined. Then an absolute of the difference is compared with a predefined angle. According to an embodiment of the present disclosure, the predefined angle is approximately 20.

If the determined difference is less than the predefined angle, then the centroid gap is considered as another parameter for matching touch shape. At operation 1105, a difference between the centroid gap in the touch shape and a recorded centroid gap is calculated.

Then the calculated difference is compared with the predefined value.

If the difference in centroid gap is less than the predefined value at operation 1105, then at operation 1106, the matched shape is obtained. If any of the comparisons mentioned in operations 1101, 1102, 1103, 1104, and 1105 fail, then the shape is not matched with any of the recorded shapes in operation 1107.

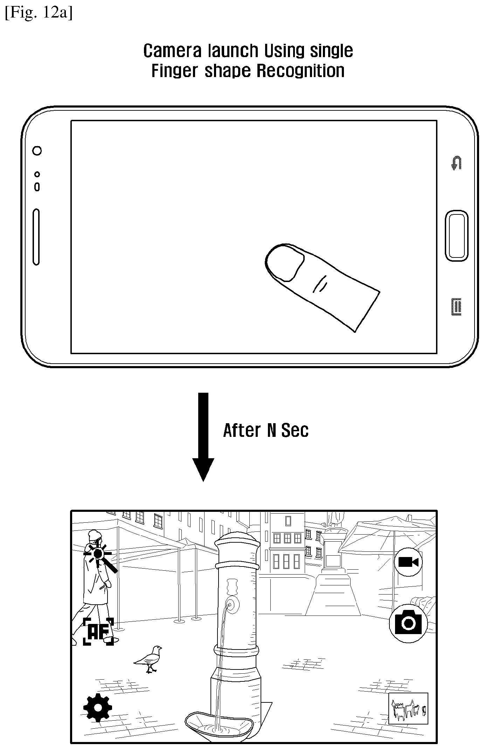

FIG. 12A is a schematic representation of launching a camera using a single finger shape identification according to an embodiment of the present disclosure. FIG. 12A illustrates a use case of a shape based a touch action launch.

Referring to FIG. 12A, according to an embodiment of the present disclosure, a camera is launched if a single finger is detected at a certain orientation over a screen, even if a display panel of a touch screen device is in a screen-off state. The touch screen device recognizes touch shapes in the screen-off state by identifying hand/finger shapes using a non-model based approach. FIG. 12A illustrates that N seconds after the performance of a gesture, the camera is launched.

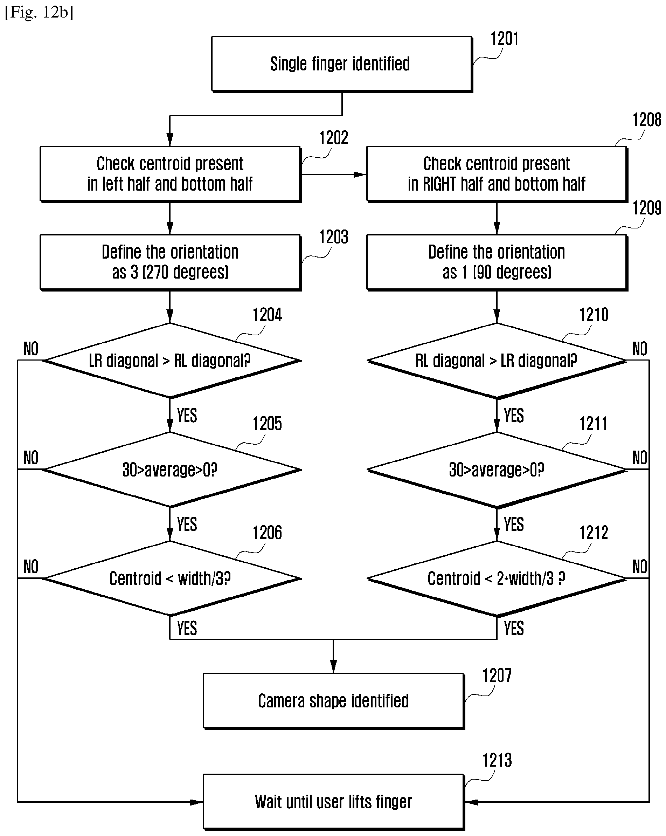

FIG. 12B is a flow chart illustrating a method of launching a camera using a single finger shape identification according to an embodiment of the present disclosure.

Referring to FIG. 12B, at operation 1201, a single finger is identified.

Further, a centroid of a left half and a bottom half of a finger is checked at operation 1202.

Then an orientation is defined as 3, which corresponds to 270 degrees (landscape mode), in operation 1203.

Then it is determined that whether the left to right diagonal of the finger is greater than the right to left diagonal of the finger at operation 1204. If the left to right diagonal is greater than the right to left diagonal, then the average angle method is implemented to identify the orientation of the shape.

The average angle is determined and compare with 30 degrees and 0 degrees at operation 1205. If the average angle is between 30 degrees and 0 degrees, then it is determined whether the centroid of the finger is less than one third of a width of the finger in operation 1206.

If the above condition of operation 1206 is satisfied, then a shape corresponding to a camera is identified and the camera is launched in the touch screen device at operation 1207.

In an embodiment of the present disclosure, after operation 1202, the centroid of the finger, the right half and the bottom half of the finger is checked to identify the shape in operation 1208.

In such cases the orientation is defined as 1, which corresponds to 90 degrees (portrait mode) as indicated in operation 1209.

Further, it is determined whether right to left diagonal is greater than the left to right diagonal at operation 1210. If the right to left diagonal is greater than the left to right diagonal, then the average angle method is applied to define the shape.

The average angle is determined and compared with 30 degrees and 0 degrees at operation 12011. If the average angle is between 30 degrees and 0 degrees, then the following condition is determined at the operation 1212:

$$centroid > 2* width/3.$$

If the above condition is satisfied, then the shape corresponding to the camera is identified and the camera is launched in the touch screen device at operation 1207.

If at least one of the conditions of operations 1204, 1205, 1206, 1210, 1211, and 1212 is not satisfied, then the touch sensitive device waits until user lifts the finger as indicated at operation 1213.

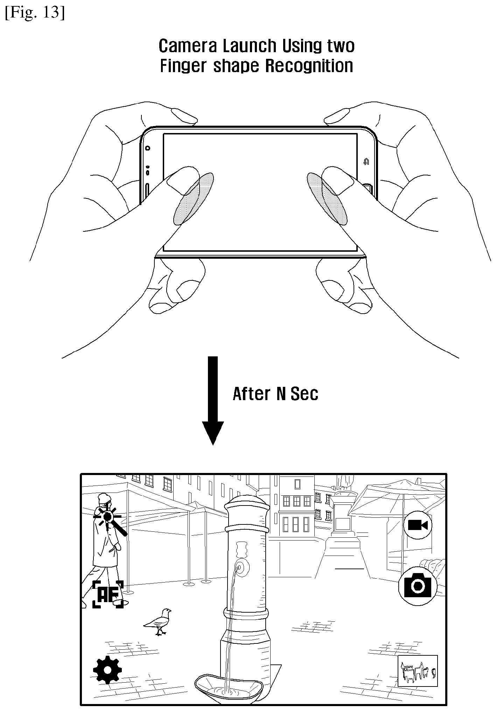

FIG. 13 is a schematic representation of launching a camera using double finger shape identification according to an embodiment of the present disclosure.

Referring to FIG. 13, when a user places two fingers at a certain orientation on a screen of a touch sensitive device for a certain amount of time (e.g., N seconds), a camera launch is performed.

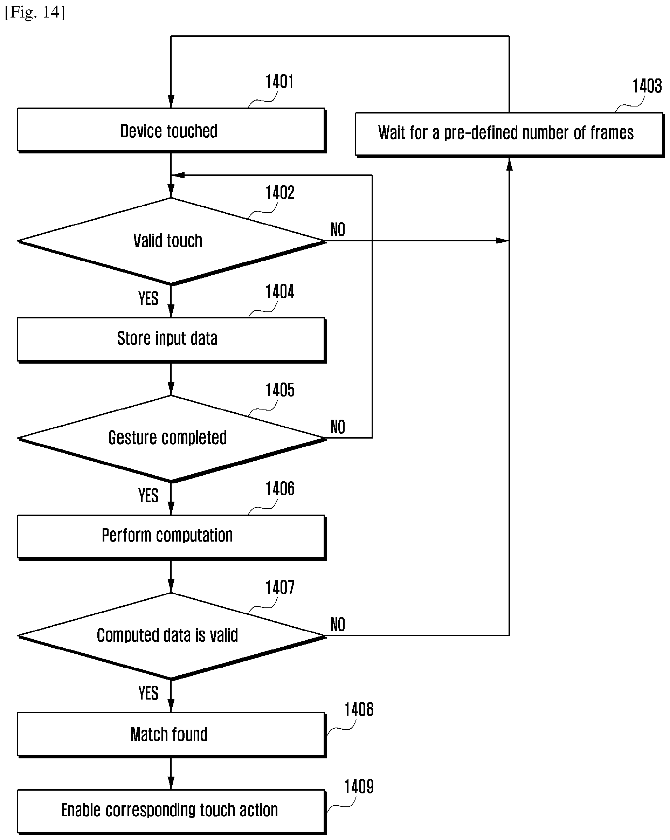

FIG. 14 is a flow chart illustrating a method of performing a touch action in a touch-sensitive device according to an embodiment of the present disclosure.

Referring to FIG. 14, a user touches a touch sensitive device at operation 1401.

Further, at operation 1402, the touch sensitive device detects a validity of the touch. In an embodiment of the present disclosure, the TSP IC provides mutual capacitance data or touch coordinate. The touch coordinate data is processed data. The validation of touch data is different for mutual capacitance data and touch coordinate data. The mutual capacitance data is a two-dimensional (2D) array input data. Each cell of the array indicates the mutual capacitance value or coupling capacity of two-crossing conductor/electrodes paths in the touch screen panel. The first operation involved in validating the input data is binarization of the input array with respect to a predetermined threshold value. This binarized data is used to identify the region of touch. The region of touch is also referred as cluster. The mutual capacitance data is considered as valid if it contains one region indicating one touch point. If the input data is touch coordinate data, then the data received is the set of parameters for all the touch locations or pointers. The set of parameters may include the two (or three) dimensional location parameters of the pointer as well as other parameters such as the area of the pointer, length and width of the pointer with respect to boundaries of the screen. The number of touch regions is determined using the parameters. The touch coordinate data is considered as valid if it contains one cluster/region indicating one touch point.

If the touch is not determined to be valid at operation 1402, then the touch-sensitive device proceeds to wait for a predefined number of frames in operation 1403 and then proceeds to operation 1401 after the predefined number of frames.

If the touch is determined to be valid at operation 1402, then at operation 1404, the validated input data is stored. In order to store the input data for usage in further computation operations, additional computation operations may be involved. If the input data is mutual capacitance data, the identified region is a set of adjacent node values. This node values are converted to a point by computing a statistical parameter such as mean of various coordinate values of the points. Further, optionally convert the node values to the touch coordinate value by multiplying with the appropriate factor. The appropriate factor is a scaling factor based on the resolution and the number of electrodes present in the touch sensitive device. If the input data is touch coordinate data, then no additional computation is required. The necessary parameters obtained from the input data are stored in the touch sensitive device.

At operation 1405, it is determined whether a gesture is completed or still in progress, (e.g., the user is still drawing the gesture). The assertion to check if the gesture is completed or not is done based on the number of empty frames (no-touch frames) received for both input data types (i.e., mutual capacitance data and touch coordinate data). The threshold for number of empty frames is the threshold time to be waited to confirm the end of gesture. The detection of end of gesture is important for gestures with multiple strokes. If multi-strokes gestures are not supported by the touch sensitive device, the detection of end of gesture fixes to handle erroneous empty data frames.

For mutual capacitance data, if the number of consecutive empty frames exceeds the threshold number, the gesture has ended. If any non-empty frame (touch frame) is received in between, then the algorithm resumes normal operation and continues normally for multi-strokes supported algorithms. In a case of single stroke algorithms this threshold is set to be very low only to compensate for erroneous empty frames. For touch coordinate data, the check for gesture completed is triggered by a pointer up event. The check for a non-empty frame is the occurrence of a pointer move or down event.

If the gesture is determined to not be completed in operation 1405, then the touch-sensitive device returns to operation 1402.

After the gesture is completed in operation 1405, then at operation 1406, the parameters are computed either using the mutual capacitance or the touch coordinate data. In an embodiment of the present disclosure, there are two approaches present in order to compute the parameters. The first method is based on directions of edges assuming the gesture to be linear and linearizing the gesture if it is not linear. The second method is based on cosine distance between the performed and every recorded gesture. All these computations may be performed in the IC or the application processor. The computation of parameters according to one embodiment of the present disclosure is explained in detail in FIGS. 13, 14, and 15.

Further, at operation 1407, the computed parameters are validated.

If the computed parameters are determined to not be valid at operation 1407, then the touch-sensitive device proceeds to operation 1403.

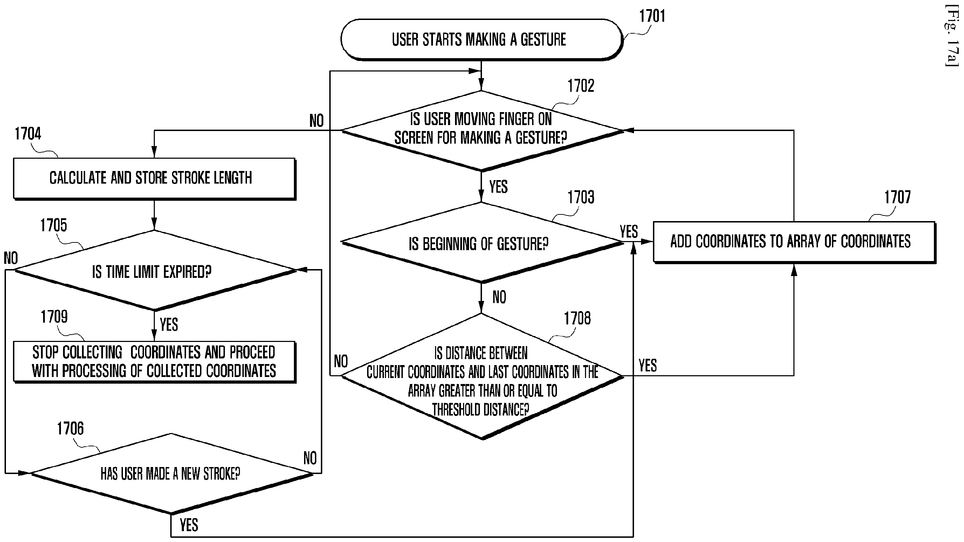

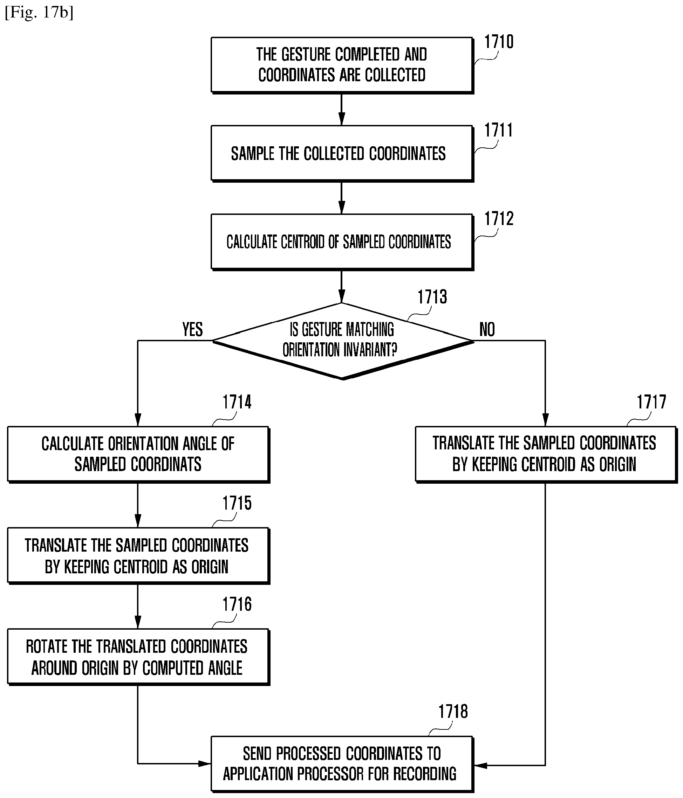

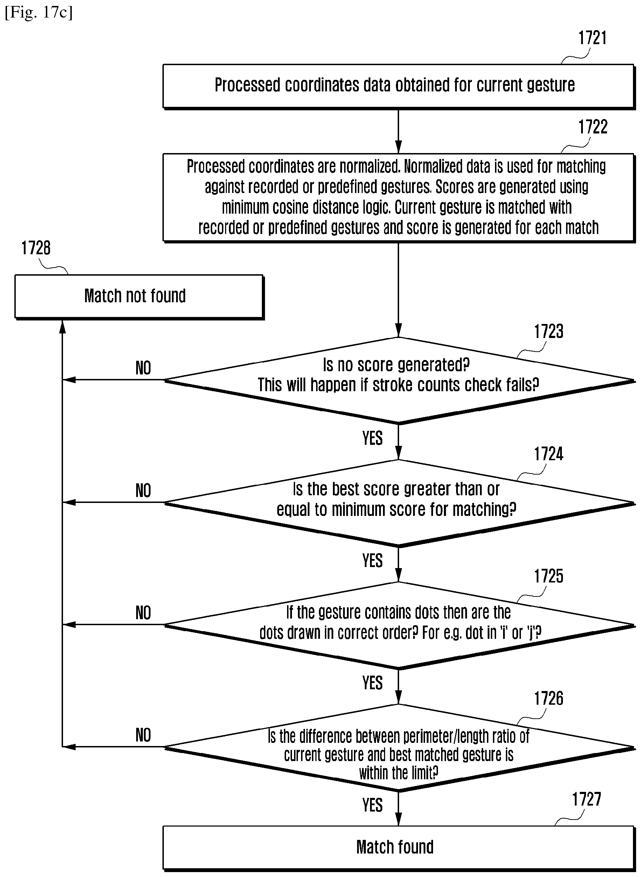

After the computed parameters are determined to be valid at operation 1407, then at operation 1408, the corresponding match is found from the one or more registered or predefined matches. The method operations involved in finding corresponding match from the one or more registered gesture is explained in detail in FIG. 17.

After the match is found at operation 1408, at operation 1409, the corresponding touch action is enabled in the touch sensitive device.

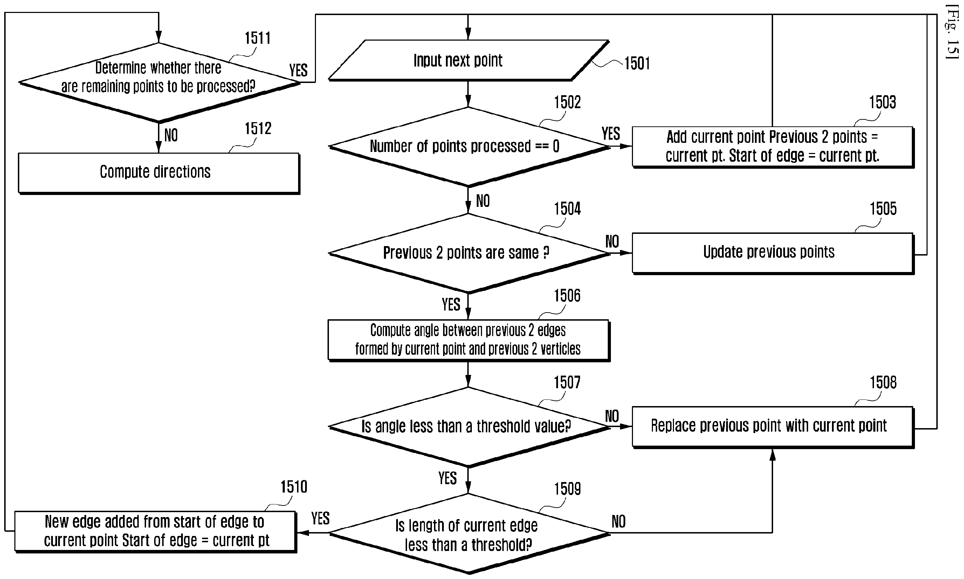

FIG. 15 is a flow chart illustrating a method of computing parameters and linearizing a gesture performed by a user according to an embodiment of the present disclosure.

Referring to FIG. 15, in an embodiment of the present disclosure, a gesture is linearized to obtain endpoints. These endpoints form edges, and direction indices of these edges are parameters used to compare and match gestures performed by the user to one or more registered gestures.

The first two points of the touch input provided by the user are considered as the first edge. Then, at operation 1501, the next point is given as the input. The next point is checked to find, whether the next point is collinear with the first edge or not.

Further, at operation 1502, it is determined whether the number of points already processed is equal to zero.

If the number of points processed is zero, then the next point is taken as the first point and the edge is started from the next point as indicated in operation 1503. If the number of points processed are not equal to zero, then it is determined that whether the previously processed points are collinear or not at operation 1504.

If the next point is collinear in operation 1504, then it is combined with the current edge, the new endpoints being one of the initial endpoints and the new point. If it is not collinear in operation 1504, then the latest endpoint of the current edge and the new point are considered as endpoints of the new current edge, so as to update the previous points at operation 1505.

If the next point is collinear in operation 1504, then at operation 1506, the angle between the previous two edges formed by current point and previous two vertices is computed.

Next, it is determined whether the angle computed in operation 1504 is less than a threshold value in operation 1507. If the computed angle is less than the predefined threshold, then a length of the edge is determined and compared to a threshold at operation 1509. The predefined threshold is set based on a number of directions approach that has been selected to compute direction. For example, a 4 direction or an 8 direction approach is used to compute the direction. If the angle is more than the predefined threshold at operation 1507 then the previous point is replaced with the current point at operation 1508. If its length is not less than a certain predefined threshold, as determined at operation 1509, then the previous point is replaced with the current point at operation 1508.

Further, the previous edge is discarded if its length is less than a certain predefined threshold value at operation 1509 and the two edges are merged as indicated in operation 1510, with the final edge having the first point of previous edge and latest point of current edge as the new current edge.

The remaining points to be processed are determined at operation 1511. If there are points to be processed, then a direction is computed for all the remaining points by returning to operation 1501. If there are no more points to be processed, then the direction is computed at operation 1512.

Further, after operations 1503, 1505 and 1508, the process returns to operation 1501.

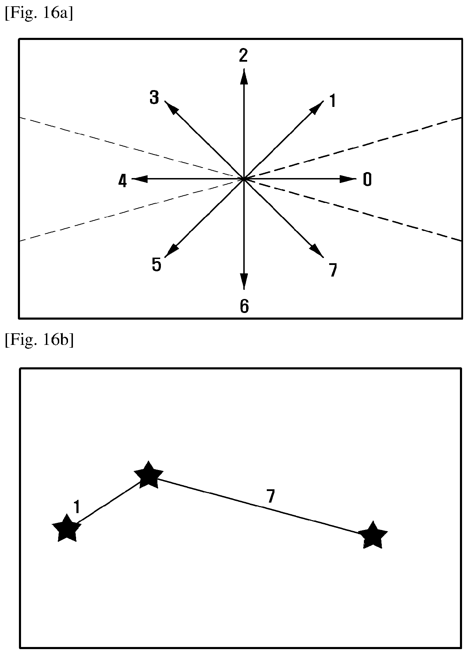

FIGS. 16A and 16B are schematic representations of computing directions according to various embodiments of the present disclosure.

After linearizing the entire gesture using the method explained in FIG. 13, the directions of each edge are computed.

Referring to FIG. 16A, an illustration is provided in which directions of the edges are computed within various ranges varying from 4 directions, 8 directions to 360 directions. These directions are computed based on the vectors obtained by considering consecutive endpoints of each edge starting from the initial point. FIG. 16A depicts the boundaries for various direction values assigned to an edge for an 8 direction. All the regions need not be of the same size necessarily. The region around each of the direction is considered as zone corresponding to that direction. For instance, the direction assigned to any edge within the zone 1 is 0 and the zone 2 is 4.

Referring to FIG. 16B, an example gesture with two edges having directions 4 and 7 is illustrated. The example gesture contains two edges. Based on the inclination of the edge, directions have been computed as 1 and 7 for each of the two edges respectively.

FIG. 17A is a flow chart illustrating a method of computing one or more parameters for matching according to an embodiment of the present disclosure.

Referring to FIG. 17A, gesture coordinates are collected in the TSP IC. While collecting coordinates of a gesture, additional operations may be performed in the interval between two strokes such as calculating and storing stroke lengths. When a user touches a screen, a touch sensitive device detects whether the user starts making a gesture it as indicated in operation 1701.

Further, it is determined whether the user is moving their finger to provide the gesture at operation 1702. If the user moves their finger in order to make the gesture, then it determines whether the current coordinates are the beginning of the gesture at operation 1703.

If the current coordinates are the beginning of the gesture, then the current coordinates are added to an array of coordinates as shown in operation 1707 and then the method returns to operation 1702. In an embodiment of the present disclosure, a completion of the gesture is iteratively determined.

If the current coordinates are not the beginning of the gesture in operation 1703, then a distance between the current coordinates and the last coordinates is calculated in operation 1708. Further, in operation 1708 it is determined whether the distance between the current coordinates and the last coordinates is greater than or equal to a predefined threshold distance. The predefined threshold distance is set based on sampling rate.

If the distance between the current coordinates and the last coordinates is greater than or equal to predefined threshold distance, then the coordinates of current points are added to coordinate array in operation 1707. If the distance between the current coordinates and the last coordinates is less than the predefined threshold distance, then control flow transfers to operation 1702.

In case, the user has lifted the finger in operation 1702 (e.g., the user is no longer moving their finger on the screen), then a stoke length is calculated and stored at operation 1704 in the touch sensitive device.

Then it is determined whether a time limit has expired at operation 1705. The gesture may contain multiple strokes; hence an empty data frame does not necessarily indicate the end of the gesture. So the time limit is the time interval between one or more strokes of a gesture.

If the time limit has not expired in operation 1705, then at operation 1706, it is determined whether the user makes a new stroke or not.

If the user makes the new stoke corresponding to the gesture, then the coordinate of the new stroke is added to the array of coordinates in operation 1707.

If the user does not make a new stroke in operation 1706, then the method returns to operation 1705. In operation 1705, if the time limit has expired, then the process of collecting coordinates stops and the processing of the collected coordinates starts as indicated at operation 1709.

FIG. 17B is a flow chart illustrating a method of processing one or more coordinates collected using the method explained in FIG. 17A according to an embodiment of the present disclosure.

Referring to FIG. 17B, collected coordinates are processed in a TSP IC. The computation required to convert the input data into parameters is done in the IC itself or partially done in another processor.

Once the user completes the gesture and the coordinates are collected at operation 1710, then collected coordinates are sampled at operation 1711.

The centroid of the sampled coordinates is calculated at operation 1712. The gesture performed on the touch sensitive device depends on the orientation of the touch sensitive device.

Hence, at operation 1713, it is determined whether the gesture matches an orientation invariant. If the gesture matches the orientation invariant, an orientation angle of the sampled coordinates is calculated at operation 1714.

Further, the sampled coordinates are translated by keeping the centroid as origin at operation 1715.

Further, at operation 1716, the translated coordinates are rotated around the origin by the calculated orientation angle.

If the gesture does not match the orientation invariant in operation 1713, then the sampled coordinates are merely translated by keeping the centroid as the origin as shown in operation 1717. Further, after operations 1716 and 1717, the processed coordinates are sent to an application processor for storing at operation 1718.

FIG. 17C is a flow chart illustrating a method of matching a gesture performed by a user with a registered gesture according to an embodiment of the present disclosure.

Referring to FIG. 17C, in an embodiment of the present disclosure, a registered gesture and a user performed gesture are compared based on a cosine distance between them. The processed coordinates are used for matching the user performed gesture at operation 1721.

At operation 1722 the processed coordinates are normalized and used for matching against recorded or predefined gestures, specified by the user. Scores are generated based on cosine distance computed between the performed and each recorded or predefined gesture individually.

The number of strokes of the performed gesture is compared with the number of strokes of the gesture it is being matched with to generate the score, such that the score is not generated if there are no strokes at operation 1723.

If the score is generated in operation 1723, then a best score obtained for the performed gesture is compared with a predefined minimum expected value, determined based on the recorded instances of the gesture, and a determination is made as to whether the best score is greater or equal to the predefined minimum expected value at operation 1724.

If the best score is greater than or equal to the predefined minimum expected value, then an order of points of touch and strokes of the performed gesture is compared with the order of points of touch and strokes of the gesture with the best score, such that a determination is made as to whether the gesture contains dots and whether the dots are drawn in a correct order at operation 1725.

If operation 1725 determines that the gesture contains the dots and that the dots are drawn in the correct order, then a ratio of a perimeter of the minimum bounding box of the performed gesture to a length of the performed gesture is compared with a ratio of a perimeter of the minimum bounding box of the gesture with the best score to a length of the gesture with the best score and a determination is made as to whether differences between the ratio of the performed gesture and the ratio of the gesture with the best score is within a limit at operation 1726.

If operation 1726 determines that differences between the ratios is within the limit, then, a determination is made that the match is found at operation 1727.

If any of the comparisons in operations 1723, 1724, 1725 and 1726 fails, then a determination is made that the match for the user performed gesture is not found is operation 1728 for the user performed gesture. Otherwise, a match is found for the performed gesture and the corresponding touch action is enabled in the touch sensitive device.

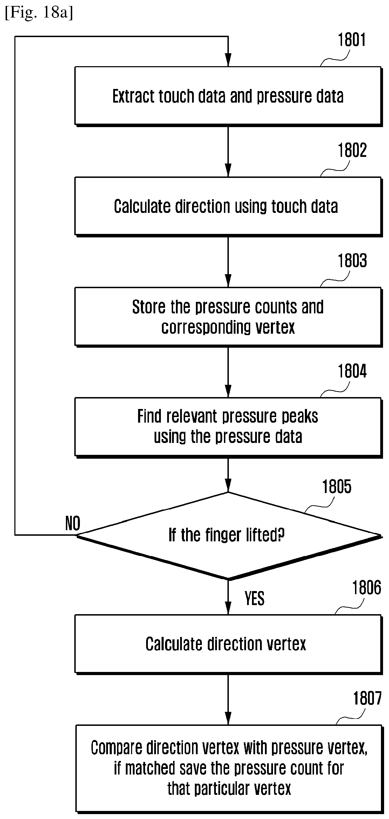

FIG. 18A is a flow chart illustrating a method of computing a pressure vertex and a direction vertex for determining a gesture performed by a user according to an embodiment of the present disclosure. In this approach, pressure data is used along with touch data to characterize a gesture. Similar shapes performed on a screen are considered as different gestures based on a number of times pressure is applied and released at each vertex of the gesture.

Referring to FIG. 18A, at operation 1801, touch data and pressure data are extracted from the TSP IC.

Based on the extracted touch data, a gesture is linearized and directions of each edge forming the gesture are computed at operation 1802.

Then a location of a pressure point, a number of times the pressure is applied at that location and a pressure vertex are stored at operation 1803.

Then pressure peaks are found using the stored pressure points and the stored pressure points are validated based on a predefined pressure peak threshold at operation 1804.

If a user lifts their finger from a screen of a touch sensitive devices at operation 1805, then a direction vertex is calculated at operation 1806 and the direction vertex and the pressure vertex are compared and if they match the user performed gesture with the registered gestures then a pressure count is saved at operation 1807.

If the finger of the user is not lifted from the screen of the touch sensitive device, then control flow transfers to operation 1801, for iteratively checking the pressure and touch data for the next coordinates.

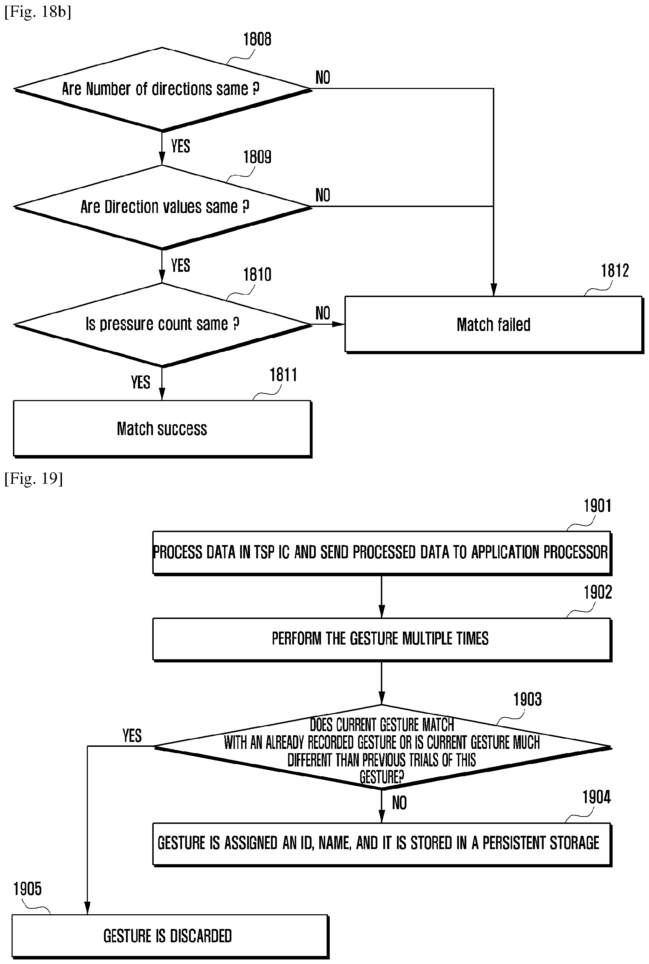

FIG. 18B is a flow chart illustrating a method of matching a gesture performed by a user with a registered gesture according to an embodiment of the present disclosure.

Referring to FIG. 18B, in an embodiment of the present disclosure, a registered gesture and a user performed gesture are compared in terms of direction of touch data and pressure count.

At operation 1808, a number of directions of touch data of the user performed gesture is compared with a number of directions present in a registered gesture.

If the number of directions of the touch data is equal to the number of directions present in the registered gesture, then direction values of the touch data and the registered gesture are compared at operation 1809.

If the direction values of the touch data of the user performed gesture are equal to the direction values of the registered gesture, then a pressure counts of the touch data and the registered gesture are compared at operation 1810.

If the pressure count of the touch data of the user performed gesture is the same as the pressure count of the registered gesture, then the match is a success at operation 1811. If any of the above comparisons in operations 1808, 1809 and 1810 fails, then the match for the user performed gesture is not found for the user performed gesture as shown in operation 1812.

FIG. 19 is a flow chart illustrating a method of registering one or more gestures with a touch sensitive device according to an embodiment of the present disclosure.

Referring to FIG. 19, in an embodiment of the present disclosure, a set of predefined trails gesture patterns are provided as reference to create a new gesture. In order to register one or more gesture with a touch sensitive device, mutual capacitance data and touch coordinate data of a touch input by a user from the TSP IC are processed and sent to the application processor at operation 1901.

Further, the touch sensitive device provides an option to the user to enter the same gesture multiple times in order to detect the minute variations in the gesture performed at each time at operation 1902. An average score is computed by taking average of all scores generated during performing gesture at each time. The scores are generated by matching gesture with stored or predefined gestures.

At operation 1903, it is determined whether a current gesture matches an already recorded gesture or whether the current gesture is different than previous trials of same gesture.

If any of the above conditions is satisfied, then the user performed gesture is discarded at operation 1905.

If the user performed gesture does not satisfy any of the conditions of operation 1903, then the gesture is assigned an identifier (ID) and name as shown in operation 1904. Further, the gesture is stored in a persistent storage such as a database or a file, along with ID, name, list of processed coordinates, and average minimum score in operation 1904.

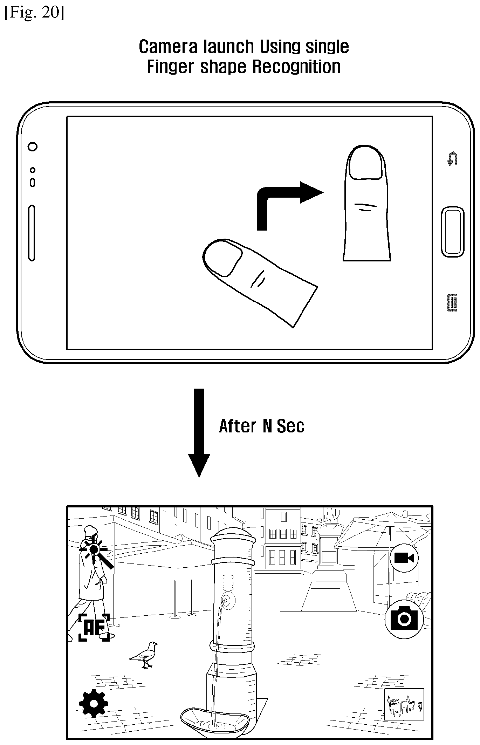

FIG. 20 is a schematic representation of launching a camera using a single finger gesture identification according to an embodiment of the present operation. The figure illustrates a use case of gesture based touch action.

Referring to FIG. 20, according to an embodiment of the present disclosure, a camera is launched if a single finger gesture at a certain orientation is detected over a screen even if a display panel of a touch screen device is in a screen-off state. The touch screen device recognizes touch gestures in the screen-off state by identifying hand/ finger shapes at certain orientation using a non-model based approach. FIG. 20 illustrates that N seconds after the performance of gesture, the camera is launched.

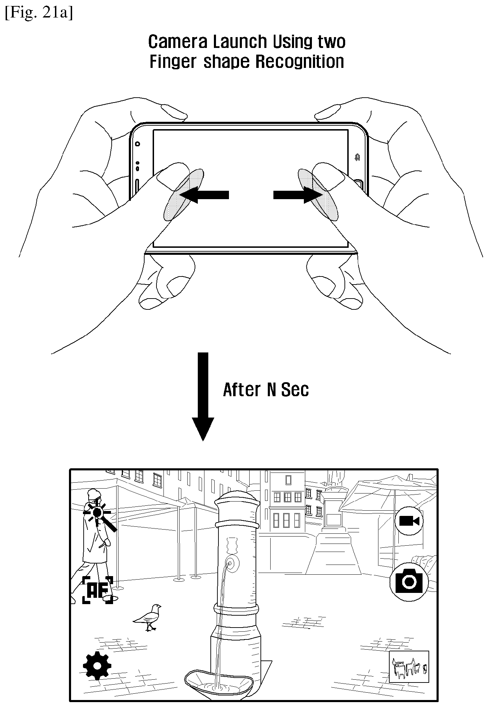

FIG. 21A is a schematic representation of launching a camera using double finger gesture identification according to an embodiment of the present disclosure.

Referring to FIG. 21A, when a user swipes two fingers at a certain orientation on a screen of a touch sensitive device, ta camera launch is performed after N seconds.

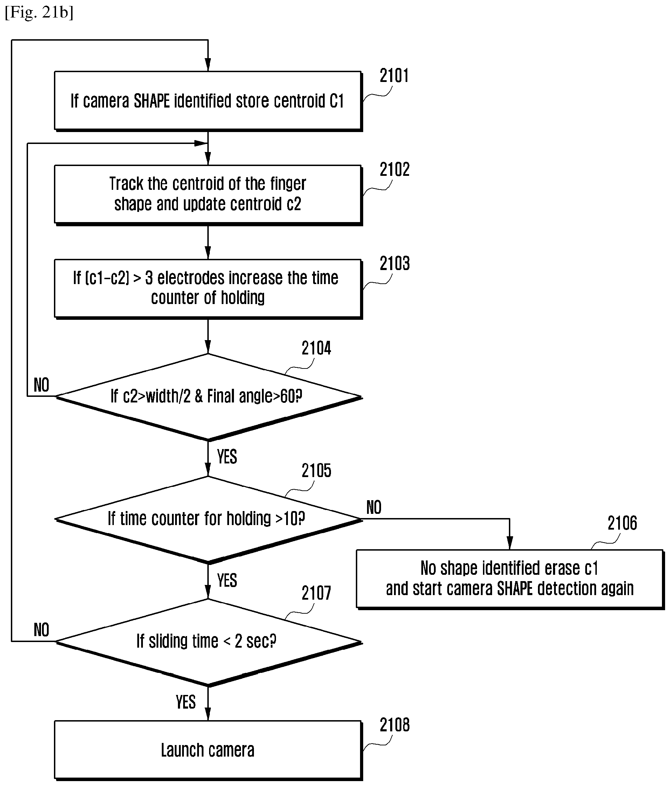

FIG. 21B is a flow chart illustrating a method of launching a camera using double finger gesture identification according to an embodiment of the present disclosure.

Referring to FIG. 21B, a touch screen identifies a shape in a screen-off state. In the present use case, a camera is launched using two fingers. The shape is determined using a centroid. At operation 2101, a centroid C1 of a first finger is stored if the camera shape is identified.

Further, a centroid of a second finger shape is tracked and updated at operation 2102. Then the difference between the centroid of the first finger (C1) and the centroid of the second finger (C2) is computed.

If the computed difference is greater than 3 electrodes, then a time counter for holding is increased as indicated in operation 2103, and then the centroid of the second finger is compared with an angle at operation 2104.

Further, in operation 2104, a determination is made as to whether C2 > width/2 and as to whether a final angle > 60. If the determinations are negative, then the method returns to operation 2102. If the determinations are positive, then the method proceeds to operation 2105.

Further, at operation 2105, it is determined whether the counter for holding is greater than a predefined number (e.g., 10). The predefined number is set based on the sampling frequency. If the above condition fails, then at operation 2106, it is declared that no shape is identified, C1 is erased and the camera grip detection starts again.

If the counter for holding is greater than the predefined number at operation 2105, then a sliding time is determined at operation 2107. If the sliding time is less than 2 seconds in operation 2107, then the camera is launched in the touch sensitive device at operation 2108.

If the sliding time is not less than 2 seconds in operation 2107, then the method returns to operation 2101.

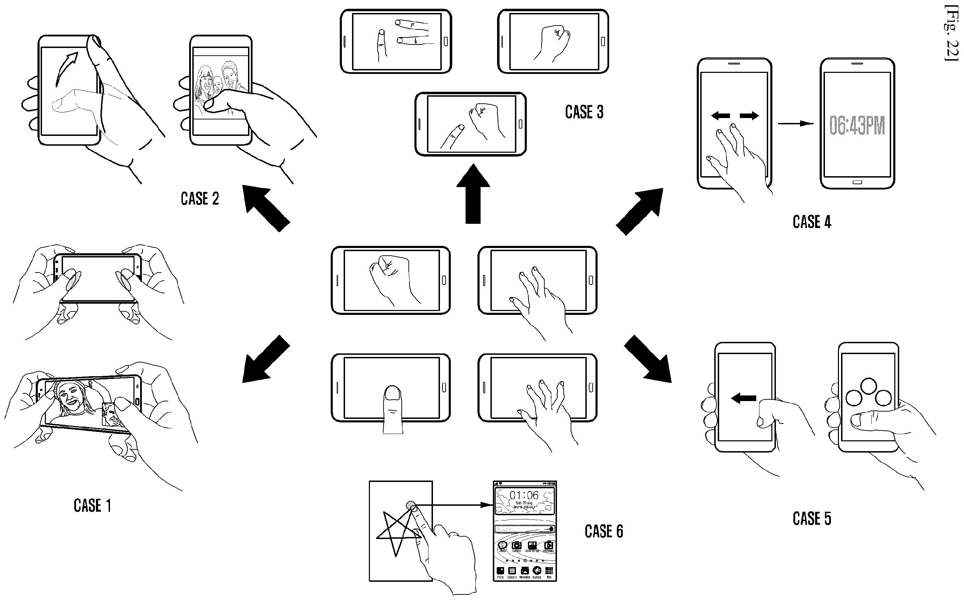

FIG. 22 is a schematic representation of launching various touch actions based on shape identification according to an embodiment of the present disclosure.

Referring to FIG. 22 six use cases are illustrated, where a touch input is provided on a touch screen of a touch sensitive device that is in a screen-off state.

The first use case 1 illustrates that a user performs a touch restore using two thumbs in the screen-off state for launching a camera. Case 1 is explained in detail in FIGS. 12A and 20 of the present disclosure.

Likewise, the second use case 2 illustrates a launch of a front camera when the user swipes the screen, as explained in detail in FIGS. 12B and 21B.

In the third use case 3, the gestures are designed in a form of a letter. The user is allowed to give touch input in the form of a specific letter or a pattern. For instance, the touch input in the form of a first letter of an application performs launching of the application. Consider that the touch input in the shape of C, then the chat on application is launched in the touch sensitive device.

According to fourth use case 4 as detailed in FIG. 20, the touch screen of the touch sensitive device shows a time and a missed call notification when the user performs a gesture such as pinch out when the touch screen of the touch sensitive device is in the screen-off state.

The fifth use case 5 depicts a small swipe gesture. When the user provides the touch input as a small swipe, then according an embodiment of the present disclosure, the touch sensitive device displays a short cut for various applications. The short cut to be displayed may be configured by the user according to preferences.

The sixth use case 6 illustrates a gesture used for unlocking the screen. The user may draw any preconfigured shape on the touch screen of the touch sensitive device, when it is in the screen-off state to unlock the touch screen. For instance, the user may configure a star shape for unlocking the screen. Once the same is performed, the screen unlocks.

Various aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the scope of the present disclosure.

**Claims**

1.  A method of performing a touch action in a touch sensitive device, the method comprising:

    sensing (101) at least one touch input provided on a touch screen of the touch sensitive device; identifying (104) a shape of a contact area associated with the at least one touch input provided on the touch screen based on one or more predefined parameters; determining (106) a touch action corresponding to the identified shape; and performing (106) the determined touch action, wherein the at least one touch input is sensed (101) when a display panel of the touch sensitive device is in a screen-off state, and

wherein the one or more predefined parameters comprise one or more of a right-left slant length of a region, a left-right slant length of a region, a number of touch points enclosed in a region, a hypotenuse of a region, a rectangularity of a region, and an elongatedness of a region, the method further comprising identifying an orientation of the shape of the contact area associated with the at least one touch input provided on the touch screen, wherein the orientation of the identified shape is determined according to an average angle method comprising:

    computing a set of a plurality of angles formed by lines joining boundary points to other boundary points where a distance between the joined boundary points is greater than or equal to a certain computed length; and determining an average of the computed set of the plurality of angles to determine the orientation of the identified shape.

2.  The method as claimed in claim 1, wherein identifying (104) the shape of the contact area comprises:

    detecting (102) a change in mutual capacitance; calculating (103) the one or more predefined parameters based on the detected change in mutual capacitance; and identifying (104) the shape of the contact area based on the calculated one or more predefined parameters.

3.  The method as claimed in claim 1, wherein the identifying (104) of the shape of the contact area comprises:

    detecting a change in a mutual capacitance of the touch screen, by a touch sensor panel integrated circuit, TSP IC, embedded in the touch sensitive device as a result of the at least one touch input; filtering (201) mutual capacitance data using a binarization method; identifying (202) one or more touch regions on the touch screen using a region identification method, defining one or more parameters based on the identified one or more touch regions; determining (203) a value of each of the one or more predefined parameters for the identified one or more touch regions; and identifying the shape based on the values determined by the determining of the value of each of the one or more predefined parameters.

**4.** The method as claimed in claim 3, wherein the one or more parameters comprise one or more of an area of a region, a width of a region, a height of a region, and an average angle of a region.

**5.** The method as claimed in claim 1, further comprising:

determining (1407) whether the identified shape is valid based on the predetermined criteria, wherein the determining of whether the identified shape is valid comprises:
matching (1408) the identified shape with one or more recorded shapes stored in the touch sensitive device by comparing one or more parameters associated with the identified shape with one or more parameters associated with the one or more recorded shapes.

**6.** The method as claimed in claim 1, further comprising:

registering (1904) the identified shape; and storing (1904) one or more parameters in a memory of the touch-sensitive device as the one or more predefined parameters.

**7.** The method as claimed in claim 1, wherein the touch action comprises one of launching a camera, launching an application, displaying a time, displaying a missed call notification, displaying a short cut for various applications and unlocking the screen.

**8.** The method as claimed in claim 1, further comprising:

determining whether the identified shape is valid based on a predetermined criteria; detecting a gesture based on a movement of a validated shape having been validated by the determining of whether the detected shape is valid; determining (1407) whether the detected gesture is valid by matching the detected gesture with one or more predefined gestures; and performing (1409) the touch action corresponding to the sensed at least one touch input based on a determination that the detected gesture is valid and a determination that the detected shape is valid.

**9.** The method as claimed in claim 8, wherein the detecting of the gesture based on the movement of the validated shape comprises:

computing a centroid of a touch region associated with the contact area; storing the centroid if a distance between the computed centroid and a previously stored centroid is above a certain predefined threshold; determining an end of the detected gesture; and discarding the detected gesture if the detected gesture has not ended within a certain predefined time period.

**10.** The method as claimed in claim 8, wherein the determining of whether the detected gesture is valid comprises:

matching the detected gesture with one or more predefined gestures corresponding to the identified shape, if the touch sensitive device is configured to perform shape matching before gesture matching; and matching the detected gesture with all registered or predefined gestures, if the touch sensitive device is not configured to perform the shape matching before the gesture matching.

**11.** A touch sensitive device performing a touch action comprising:

a memory configured to store one or more predefined parameters; a touch screen configured to sense at least one touch input; and a processor configured to:

sense (101) the at least one touch input provided on the touch screen, identify (104) a shape of a contact area associated with the at least one touch input based on the one or more predefined parameters, determine (106) a touch action corresponding to the identified shape, and perform (106) the determined touch action,

wherein the at least one touch input is sensed (101) when a display panel of the touch sensitive device is in a screen-off state, wherein the one or more predefined parameters comprise one or more of a right-left slant length of a region, a left-right slant length of a region, a number of touch points enclosed in a region, a hypotenuse of a region, a rectangularity of a region, and an elongatedness of a region, wherein the processor is further configured to identify an orientation of the shape of the contact area associated with the at least one touch input provided on the touch screen, and wherein the processor is further configured to determine the orientation of the identified shape according to an average angle method comprising:

computing a set of a plurality of angles formed by lines joining boundary points to other boundary points where a distance between the joined boundary points is greater than or equal to a certain computed length; and

determining an average of the computed set of the plurality of angles to determine the orientation of the identified shape.

12. The touch sensitive device of claim 11, wherein the processor is configured to:

detect a change in a mutual capacitance of the touch screen, by a touch sensor panel integrated circuit, TSP IC, embedded in the touch sensitive device as a result of the at least one touch input, filter (201) mutual capacitance data using a binarization method,

identify (202) one or more touch regions on the touch screen using a region identification method,

define one or more parameters based on the identified one or more touch regions,

determine (203) a value of each of the one or more predefined parameters for the identified one or more touch regions, and

identify the shape based on the values determined by the determining of the value of each of the one or more predefined parameters.

13. The touch sensitive device of claim 11, wherein the processor is configured to:

match (1408) the identified shape with one or more recorded shapes stored in the touch sensitive device by comparing one or more parameters associated with the identified shape with one or more parameters associated with the one or more recorded shapes,

determine whether the identified shape is valid, and

if the identified shape is valid, perform (1409) the touch action corresponding the at least one touch input based on the identified shape.

14. The touch sensitive device of claim 11, wherein the processor is configured to:

sense at least one touch input provided on a touch screen of the touch sensitive device, identify a shape of a contact area associated with the sensed at least one touch input provided on the touch screen based on one or more predefined parameters,

determine whether the identified shape is valid based on a predetermined criteria,

detect a gesture based on a movement of a validated shape having been validated by the determining of whether the detected shape is valid, determine (1407) whether the detected gesture is valid by matching the detected gesture with one or more predefined gestures, and

perform (1409) the touch action corresponding to the sensed at least one touch input based on a determination that the detected gesture is valid and a determination that the detected shape is valid.

15. The touch sensitive device of claim 11, wherein the processor is configured to:

match the detected gesture with one or more predefined gestures corresponding to the identified shape, if the touch sensitive device is configured to perform shape matching before gesture matching,

match the detected gesture with all registered or predefined gestures, if the touch sensitive device is not configured to perform the shape matching before the gesture matching.

**Patentansprüche**

1. Verfahren zum Durchführen einer Berührungsaktion in einem berührungsempfindlichen Gerät, wobei das Verfahren umfasst:

Erfassen (101) von mindestens einer Berührungseingabe, die auf einem Touchscreen des berührungsempfindlichen Geräts bereitgestellt wird; Identifizieren (104) einer Form einer Kontaktzone, die der mindestens einen Berührungseingabe zugeordnet ist, die auf dem Touchscreen bereitgestellt wird, basierend auf einem oder mehreren vordefinierten Parametern;

Bestimmen (106) einer Berührungsaktion, die der identifizierten Form entspricht; und Durchführen (106) der bestimmten Berührungsaktion, wobei die mindestens eine Berührungseingabe erfasst (101) wird, wenn sich ein Anzeigefeld des berührungsempfindlichen Geräts in einem Bildschirm-Aus-Zustand befindet, und

wobei der eine oder die mehreren vordefinierten Parameter eine oder mehrere von einer Rechts-Links-Neigungslänge eines Bereichs, einer Links-Rechts-Neigungslänge eines Bereichs, einer Anzahl von in einem Bereich eingeschlossenen Berührungspunkten, einer Hypotenuse eines Bereichs, einer Rechtwinkligkeit eines Bereichs und einer länglichen Form eines Bereichs umfassen,

wobei das Verfahren ferner das Identifizieren einer Ausrichtung der Form der Kontaktzone umfasst, die der mindestens einen Berührungseingabe zugeordnet ist, die auf dem Touchscreen bereitgestellt wird,

wobei die Ausrichtung der identifizierten Form gemäß einem Durchschnittswinkelverfahren bestimmt wird, das umfasst:

Berechnen eines Satzes einer Vielzahl von Winkeln, die durch Linien gebildet werden, die Grenzpunkte mit anderen Grenzpunkten verbinden, wobei ein Abstand zwischen den verbundenen Grenzpunkten größer als oder gleich eine bestimmte berechnete Länge ist; und

Bestimmen eines Durchschnitts des berechneten Satzes der Vielzahl von Winkeln, um die Ausrichtung der identifizierten Form zu bestimmen.

2. Verfahren nach Anspruch 1, wobei das Identifizieren (104) der Form der Kontaktzone umfasst:

Erfassen (102) einer Änderung in einer gegenseitigen Kapazität;

Berechnen (103) des einen oder der mehreren vordefinierten Parameter basierend auf der erfassten Änderung in der gegenseitigen Kapazität; und

Identifizieren (104) der Form der Kontaktzone basierend auf dem berechneten einen oder den berechneten mehreren vordefinierten Parametern.

3. Verfahren nach Anspruch 1, wobei das Identifizieren (104) der Form der Kontaktzone umfasst:

Erfassen einer Änderung in einer gegenseitigen Kapazität des Touchscreens durch eine integrierte Schaltung des Berührungssensorfelds, TSP IC, die in das berührungsempfindliche Gerät eingebettet ist, als Ergebnis der mindestens einen Berührungseingabe;

Filtern (201) gegenseitiger Kapazitätsdaten unter Verwendung eines Binärisierungsverfahrens;

Identifizieren (202) von einem oder mehreren Berührungsbereichen auf dem Touchscreen unter Verwendung eines Bereichsidentifizierungsverfahrens, Definieren von einem oder mehreren Parametern basierend auf dem identifizierten einen oder den identifizierten mehreren Berührungsbereichen; Bestimmen (203) eines Werts von jedem von dem einen oder den mehreren vordefinierten Parametern für den identifizierten einen oder die identifizierten mehreren Berührungsbereiche; und

Identifizieren der Form basierend auf den Werten, die durch Bestimmen des Werts von jedem von dem einen oder den mehreren vordefinierten Parameter bestimmt werden.

4. Verfahren nach Anspruch 3, wobei der eine oder die mehreren Parameter eine oder mehrere von einer Zone eines Bereichs, eine Breite eines Bereichs, eine Höhe eines Bereichs und einen Durchschnittswinkel eines Bereichs umfassen.

5. Verfahren nach Anspruch 1, ferner umfassend: Bestimmen (1407), ob die identifizierte Form gültig ist, basierend auf den vorbestimmten Kriterien, wobei das Bestimmen, ob die identifizierte Form gültig ist, umfasst: Abgleichen (1408) der identifizierten Form mit einer oder mehreren aufgezeichneten Formen, die in dem berührungsempfindlichen Gerät gespeichert sind, durch Vergleichen von einem oder mehreren Parametern, die der identifizierten Form zugeordnet sind, mit einem oder mehreren Parametern, die der einen oder den mehreren aufgezeichneten Formen zugeordnet sind.

6. Verfahren nach Anspruch 1, ferner umfassend: Registrieren (1904) der identifizierten Form; und Speichern (1904) von einem oder mehreren Parametern in einem Speicher des berührungsempfindlichen Geräts als der eine oder die mehreren vordefinierten Parameter.

7. Verfahren nach Anspruch 1, wobei die Berührungsaktion einen von dem Starten einer Kamera, Starten einer Anwendung, Anzeigen einer Uhrzeit, Anzeigen einer Benachrichtigung über verpasste Anrufe, Anzeigen einer Abkürzung für verschiedene Anwendungen und Entsperren des Bildschirms umfasst.

8. Verfahren nach Anspruch 1, ferner umfassend:

Bestimmen, ob die identifizierte Form gültig ist, basierend auf vorbestimmte Kriterien; Erfassen einer Geste basierend auf einer Bewegung einer validierten Form, die validiert wurde, indem bestimmt wurde, ob die erfasste Form gültig ist; Bestimmen (1407), ob die erfasste Geste gültig ist, indem die erfasste Geste mit einer oder mehreren vordefinierten Gesten abgeglichen wird; und

Durchführen (1409) der Berührungsaktion, die der erfassten mindestens einen Berührungseingabe entspricht, basierend auf einer Bestimmung, dass die erfasste Geste gültig ist, und einer Bestimmung, dass die erfasste Form gültig ist.

9. Verfahren nach Anspruch 8, wobei das Erfassen der Geste basierend auf der Bewegung der validierten Form umfasst:

Berechnen eines Schwerpunkts eines Berührungsbereichs, der der Kontaktzone zugeordnet ist; Speichern des Schwerpunkts, wenn ein Abstand zwischen dem berechneten Schwerpunkt und einem zuvor gespeicherten Schwerpunkt über einem bestimmten vordefinierten Schwellenwert liegt;

Bestimmen eines Endes der erfassten Geste; und

Verwerfen der erfassten Geste, wenn die erfasste Geste nicht innerhalb eines bestimmten vordefinierten Zeitraums zu Ende ist.

10. Verfahren nach Anspruch 8, wobei das Bestimmen, ob die erfasste Geste gültig ist, umfasst:

Abgleichen der erfassten Geste mit einer oder mehreren vordefinierten Gesten, die der identifizierten Form entsprechen, wenn das berührungsempfindliche Gerät konfiguriert ist, um vor dem Gestenabgleich eine Formanpassung durchzuführen; und

Abgleichen der erfassten Geste mit allen registrierten oder vordefinierten Gesten, wenn das berührungsempfindliche Gerät nicht konfiguriert ist, um vor dem Gestenabgleich die Formanpassung durchzuführen.

11. Berührungsempfindliches Gerät, das eine Berührungsaktion durchführt, umfassend: einen Speicher, der konfiguriert ist, um einen oder mehrere vordefinierte Parameter zu speichern; einen Touchscreen, der konfiguriert ist, um mindestens eine Berührungseingabe zu erfassen; und einen Prozessor, der konfiguriert ist, um:

die mindestens eine Berührungseingabe zu erfassen (101), die auf dem Touchscreen bereitgestellt wird, eine Form einer Kontaktzone zu identifizieren (104), die der mindestens einen Berührungseingabe zugeordnet ist, basierend auf dem einen oder den mehreren vordefinierten Parametern, eine Berührungsaktion zu bestimmen (106), die der identifizierten Form entspricht, und die bestimmte Berührungsaktion durchzuführen (106),

wobei die mindestens eine Berührungseingabe erfasst wird (101), wenn sich ein Anzeigefeld des berührungsempfindlichen Geräts in einem Bildschirm-Aus-Zustand befindet,

wobei der eine oder die mehreren vordefinierten Parameter eine oder mehrere von einer Rechts-Links-Neigungslänge eines Bereichs, einer Links-Rechts-Neigungslänge eines Bereichs, einer Anzahl von in einem Bereich eingeschlossenen Berührungspunkten, einer Hypotenuse eines Bereichs, einer Rechtwinkligkeit eines Bereichs und einer länglichen Form eines Bereichs umfassen,

wobei der Prozessor ferner konfiguriert ist, um eine Ausrichtung der Form der Kontaktzone zu identifizieren, die der mindestens einen Berührungseingabe zugeordnet ist, die auf dem Touchscreen bereitgestellt wird, und

wobei der Prozessor ferner konfiguriert ist, um die Ausrichtung der identifizierten Form gemäß einem Durchschnittswinkelverfahren zu bestimmen, das umfasst:

Berechnen eines Satzes einer Vielzahl von Winkeln, die durch Linien gebildet werden, die Grenzpunkte mit anderen Grenzpunkten verbinden, wobei ein Abstand zwischen den verbundenen Grenzpunkten größer als oder gleich eine bestimmte berechnete Länge ist; und

Bestimmen eines Durchschnitts des berechneten Satzes der Vielzahl von Winkeln, um die Ausrichtung der identifizierten Form zu bestimmen.

12. Berührungsempfindliches Gerät nach Anspruch 11, wobei der Prozessor konfiguriert ist, um: eine Änderung in einer gegenseitigen Kapazität des Touchscreens durch eine integrierte Schaltung des Berührungssensorfelds,

TSP IC, die in das berührungsempfindliche Gerät eingebettet ist, zu erfassen, als Ergebnis der mindestens einen Berührungseingabe, gegenseitige Kapazitätsdaten unter Verwendung eines Binärisierungsverfahrens zu filtern (201), einen oder mehrere Berührungsbereiche auf dem Touchscreen unter Verwendung eines Bereichsidentifizierungsverfahrens zu identifizieren (202), einen oder mehrere Parameter basierend auf dem identifizierten einen oder den identifizierten mehreren Berührungsbereichen zu definieren, einen Wert von jedem von dem einen oder den mehreren vordefinierten Parametern für den identifizierten einen oder die identifizierten mehreren Berührungsbereiche zu bestimmen (203), und die Form basierend auf den Werten, die durch das Bestimmen des Werts von jedem von dem einen oder den mehreren vordefinierten Parametern bestimmt werden, zu identifizieren.

13. Berührungsempfindliches Gerät nach Anspruch 11, wobei der Prozessor konfiguriert ist, um: die identifizierte Form mit einer oder mehreren aufgezeichneten Formen abzugleichen (1408), die in dem berührungsempfindlichen

Gerät gespeichert sind, durch Vergleichen von einem oder mehreren Parametern, die der identifizierten Form zugeordnet sind, mit einem oder mehreren Parametern, die der einen oder den mehreren aufgezeichneten Formen zugeordnet sind, zu bestimmen, ob die identifizierte Form gültig ist, und, wenn die identifizierte Form gültig ist, die Berührungsaktion durchzuführen (1409), die der mindestens einen Berührungseingabe entspricht, basierend auf der identifizierten Form.

14. Berührungsempfindliches Gerät nach Anspruch 11, wobei der Prozessor konfiguriert ist, um: mindestens eine Berührungseingabe zu erfassen, die auf einem Touchscreen des berührungsempfindlichen Geräts bereitgestellt wird, eine Form einer Kontaktzone zu identifizieren, die der erfassten mindestens einen Berührungseingabe zugeordnet ist, die auf dem Touchscreen bereitgestellt ist, basierend auf einem oder mehreren vordefinierten Parametern, zu bestimmen, ob die identifizierte Form gültig ist, basierend auf vorbestimmten Kriterien, eine Geste basierend auf einer Bewegung einer validierten Form zu erfassen, die validiert wurde, indem bestimmt wurde, ob die erfasste Form gültig ist, zu bestimmen (1407), ob die erfasste Geste gültig ist, indem die erfasste Geste mit einer oder mehreren vordefinierten Gesten abgeglichen wird, und die Berührungsaktion durchzuführen (1409), die der erfassten mindestens einen Berührungseingabe entspricht, basierend auf einer Bestimmung, dass die erfasste Geste gültig ist, und einer Bestimmung, dass die erfasste Form gültig ist.

15. Berührungsempfindliches Gerät nach Anspruch 11, wobei der Prozessor konfiguriert ist, um: die erfasste Geste mit einer oder mehreren vordefinierten Gesten abzugleichen, die der identifizierten Form entsprechen, wenn das berührungsempfindliche Gerät konfiguriert ist um, vor dem Gestenabgleich eine Formanpassung durchzuführen, die erfasste Geste mit allen registrierten oder vordefinierten Gesten abzugleichen, wenn das berührungsempfindliche Gerät nicht konfiguriert ist, um vor dem Gestenabgleich die Formanpassung durchzuführen.

**Revendications**

1. Méthode d'exécution d'une action tactile dans un dispositif tactile, la méthode comprenant :

   la détection (101) d'au moins une entrée tactile pratiquée sur un écran tactile du dispositif tactile ;
   l'identification (104) d'une forme d'une zone de contact associée à l'au moins une entrée tactile pratiquée sur l'écran tactile basé sur un ou plusieurs paramètres prédéfinis ;
   la détermination (106) d'une action tactile correspondant à la forme identifiée ; et
   l'exécution (106) de l'action tactile déterminée, l'au moins une entrée tactile étant détectée (101) lorsqu'un panneau d'affichage du dispositif tactile se trouve à l'état d'écran éteint, et l'un ou plusieurs paramètres prédéfinis comprenant un ou plusieurs d'une longueur inclinée droite gauche d'une région, d'une longueur inclinée gauche-droite d'une région, d'un nombre de points tactiles contenus dans une région, d'une hypoténuse d'une région, d'une rectangularité d'une région, et de l'aspect allongé d'une région,
la méthode comprenant en outre l'identification d'une orientation de la forme de la zone de contact associée à l'au moins une entrée tactile pratiquée sur l'écran tactile,
l'orientation de la forme identifiée étant déterminée selon une méthode d'angle moyen, comprenant :

   le calcul d'un ensemble d'une pluralité d'angles constitués par des lignes reliant des points limites à d'autres points limites, où une distance entre les points limites reliés est supérieure ou égale à une certaine longueur calculée ; et
   la détermination d'une moyenne de l'ensemble calculé de la pluralité d'angles pour déterminer l'orientation de la forme identifiée.

2. Méthode selon la revendication 1, l'identification (104) de la forme de la zone de contact comprenant :

   la détection (102) d'un changement de la capacité mutuelle ;
   le calcul (103) de l'un ou plusieurs paramètres prédéfinis sur la base du changement détecté de la capacité mutuelle ; et
   l'identification (104) de la forme de la zone de contact sur la base de l'un ou plusieurs paramètres prédéfinis calculés.

3. Méthode selon la revendication 1, l'identification (104) de la forme de la zone de contact comprenant :

   la détection d'un changement de la capacité mutuelle de l'écran tactile, par un circuit intégré de panneau de capteur tactile, TSP IC, intégré dans le dispositif tactile à la suite de l'au moins une entrée tactile ;
   le filtrage (201) de données de capacité mutuelle à l'aide d'une méthode de binarisation ;
   l'identification (202) d'une ou plusieurs régions tactiles sur l'écran tactile, à l'aide d'une méthode d'identification des régions, définissant un ou plusieurs paramètres basés sur l'une ou plusieurs régions tactiles identifiées ;
   la détermination (203) d'une valeur de chacun de l'un ou plusieurs paramètres prédéfinis pour l'une ou plusieurs régions tactiles identifiées ; et

l'identification de la forme sur la base des valeurs déterminées par la détermination de la valeur de chacun de l'un ou plusieurs paramètres prédéfinis.

4. Méthode selon la revendication 3, l'un ou plusieurs paramètres comprenant un ou plusieurs d'une région, d'une largeur d'une région, d'une hauteur d'une région, et d'un angle moyen d'une région.

5. Méthode selon la revendication 1, comprenant en outre :
la détermination (1407) de la validité de la forme identifiée d'après des critères prédéterminés, la détermination de la validité de la forme identifiée comprenant :
l'appariement (1408) de la forme identifiée avec une ou plusieurs formes enregistrées stockées dans le dispositif tactile, en comparant un ou plusieurs paramètres associés à la forme identifiée avec un ou plusieurs paramètres associés à l'une ou plusieurs formes enregistrées.

6. Méthode selon la revendication 1, comprenant en outre :

    l'enregistrement (1904) de la forme identifiée ; et
    le stockage (1904) d'un ou plusieurs paramètres dans une mémoire du dispositif tactile en tant qu'un ou plusieurs paramètres prédéfinis.

7. Méthode selon la revendication 1, l'action tactile comprenant un du lancement d'une caméra, du lancement d'une application, de l'affichage d'une heure, de l'affichage d'une notification d'appel manqué, de l'affichage d'un raccourci pour différentes applications, et du déblocage de l'écran.

8. Méthode selon la revendication 1, comprenant en outre :

    détermination de la validité de la forme identifiée sur la base d'un critère prédéterminé ;
    la détection d'un geste sur la base d'un mouvement d'une forme validée ayant été validée par la détermination de la validité de la forme détectée ;
    la détermination (1407) de la validité du geste détecté en appariant le geste détecté avec un ou plusieurs gestes prédéfinis ; et
    l'exécution (1409) de l'action tactile correspondant à l'au moins une entrée tactile détectée, sur la base d'une détermination de la validité du geste détecté, et d'une détermination de la validité de la forme détectée.

9. Méthode selon la revendication 8, la détection du geste sur la base du mouvement de la forme validée comprenant :

    le calcul d'un centroïde d'une région tactile associée à la zone de contact ;
    le stockage du centroïde si une distance entre le centroïde calculé et un centroïde stocké précédemment se situe au-dessus d'un certain seuil prédéfini ;
    la détermination d'une fin du geste détecté ; et
    l'élimination du geste détecté si le geste détecté ne s'est pas terminée dans des délais prédéfinis.

10. Méthode selon la revendication 8, la détermination de la validité du geste détecté comprenant :

    l'appariement du geste détecté avec un ou plusieurs gestes prédéfinis correspondant à la forme identifiée, si le dispositif tactile est configuré pour effectuer l'appariement de la forme avant l'appariement du geste ; et
    l'appariement du geste détecté avec tous les gestes enregistrés ou prédéfinis, si le dispositif tactile n'est pas configuré pour effectuer l'appariement de la forme avant l'appariement du geste.

11. Dispositif tactile effectuant une action tactile comprenant :

    une mémoire configurée pour stocker un ou plusieurs paramètres prédéfinis ;
    un écran tactile configuré pour détecter au moins une entrée tactile ; et
    un processeur configuré pour :

        détecter (101) l'au moins une entrée tactile pratiquée sur l'écran tactile, identifier (104) une forme d'une zone de contact associée à l'au moins une entrée tactile basée sur l'un ou plusieurs paramètres prédéfinis, déterminer (106) une action tactile correspondant à la forme identifiée, et effectuer (106) l'action tactile déterminée,
        l'au moins une entrée tactile étant détectée (101) lorsqu'un panneau d'affichage du dispositif tactile se trouve à l'état d'écran éteint,
        l'un ou plusieurs paramètres prédéfinis comprenant un ou plusieurs d'une longueur inclinée droite gauche d'une région, d'une longueur inclinée gauche-droite d'une région, d'un nombre de points tactiles contenus dans une région, d'une hypoténuse d'une région, d'une rectangularité d'une région, et de l'aspect allongé d'une région
        le processeur étant configuré en outre pour identifier une orientation de la forme de la zone de contact associée à l'au moins une entrée tactile pratiquée sur l'écran tactile, et le processeur étant configuré en outre pour déterminer l'orientation de la forme identifiée selon une méthode d'angle moyen comprenant :

le calcul d'un ensemble d'une pluralité d'angles constitués par des lignes reliant des points limites à d'autres points limites, où une distance entre les points limites reliés est supérieure ou égale à une certaine longueur calculée ; et la détermination d'une moyenne de l'ensemble calculé de la pluralité d'angles pour déterminer l'orientation de la forme identifiée.

**12.** Dispositif tactile selon la revendication 11, le processeur étant configuré pour :

détecter un changement de la capacité mutuelle de l'écran tactile par un circuit intégré de panneau de capteur tactile, TSP IC, intégré dans le dispositif tactile à la suite de l'au moins une entrée tactile,
filtrer (201) des données de capacité mutuelle à l'aide d'une méthode de binarisation,
identifier (202) une ou plusieurs régions tactiles sur l'écran tactile, à l'aide d'une méthode d'identification des régions, définissant un ou plusieurs paramètres basés sur l'une ou plusieurs régions tactiles identifiées,
déterminer (203) une valeur de chacun de l'un ou plusieurs paramètres prédéfinis pour l'une ou plusieurs régions tactiles identifiée, et
identifier la forme sur la base des valeurs déterminées par la détermination de la valeur de chacun de l'un ou plusieurs paramètres prédéfinis.

**13.** Dispositif tactile selon la revendication 11, le processeur étant configuré pour :

apparier (1408) la forme identifiée avec une ou plusieurs formes enregistrées stockées dans le dispositif tactile, en comparant un ou plusieurs paramètres associés à la forme identifiée avec un ou plusieurs paramètres associés à l'une ou plusieurs formes enregistrées,
déterminer la validité de la forme identifiée, et si la forme identifiée est valable, effectuer (1409) l'action tactile correspondant à l'au moins une entrée tactile basée sur la forme identifiée.

**14.** Dispositif tactile selon la revendication 11, le processeur étant configuré pour :

détecter au moins une entrée tactile pratiquée sur un écran tactile du dispositif tactile ,

identifier une forme d'une zone de contact associée à l'au moins une entrée tactile détectée pratiquée sur l'écran tactile basé sur un ou plusieurs paramètres prédéfinis,
déterminer la validité d'une forme identifiée sur la base d'un critère prédéterminé,
détecter un geste sur la base d'un mouvement d'une forme validée ayant été validée par la détermination de la validité de la forme détectée
détecter (1407) la validité du geste détecté en appariant le geste détecté avec un ou plusieurs gestes prédéfinis ; et
effectuer (1409) l'action tactile correspondant à l'au moins une entrée tactile détectée, sur la base d'une détermination de la validité du geste détecté, et d'une détermination de la validité de la forme détectée.

**15.** Dispositif tactile selon la revendication 11, le processeur étant configuré pour :

apparier le geste détecté avec un ou plusieurs gestes prédéfinis correspondant à la forme identifiée, si le dispositif tactile est configuré pour effectuer l'appariement de la forme avant l'appariement du geste ; et
apparier le geste détecté avec tous les gestes enregistrés ou prédéfinis, si le dispositif tactile n'est pas configuré pour effectuer l'appariement de la forme avant l'appariement du geste.

[Fig. 1]

```
┌─────────────────────────────────────────────────────┐  101
│               USER TOUCHES THE SCREEN                │
└─────────────────────────────────────────────────────┘
                          │
                          ▼
┌─────────────────────────────────────────────────────┐  102
│    MUTUAL CAPACITANCE DATAOBTAINED FROM TOUCH CONTROLLER │
└─────────────────────────────────────────────────────┘
                          │
                          ▼
┌─────────────────────────────────────────────────────┐  103
│    PROCESS MUTUAL CAPACITANCE DATA AND PERFORM COMPUTATION │
└─────────────────────────────────────────────────────┘
                          │
                          ▼
┌─────────────────────────────────────────────────────┐  104
│              PREDEFINED SHAPE IDENTIFICATION          │
└─────────────────────────────────────────────────────┘
                          │
                          ▼
                    IDENTIFIED SHAPE PATTERN MATCHES            105
              WITH PRE-DEFINED OR RECORDED SHAPE PATTERN? A SHAPE PATTERN CAN BE      NO
                    COMBINATION OF MULTIPLE SHAPES
                          │
                         YES
                          ▼
┌─────────────────────────────────────────────────────┐  106
│      Enable Touch Action CORRESPONDING TO MATCH FOUND │
└─────────────────────────────────────────────────────┘
```

[Fig. 2]

```
┌─────────────────────────────────────────────────────┐  201
│               DATA BINARIZATION                      │
└─────────────────────────────────────────────────────┘
                          │
                          ▼
┌─────────────────────────────────────────────────────┐  202
│               REGION IDENTIFICATION                  │
└─────────────────────────────────────────────────────┘
                          │
                          ▼
┌─────────────────────────────────────────────────────┐  203
│       COMPUTE PARAMETER FOR EACH REGION IDENTIFIED   │
└─────────────────────────────────────────────────────┘
```

[Fig. 3]

```
                    301
      NO    Current Node Value>Threshold ?    YES
      │                                        │
      ▼                                        ▼
┌─────────────────────┐  302        ┌─────────────────────┐  303
│ SET CURRENT NODE VALUE=0 │        │ SET CURRENT NODE VALUE=1 │
└─────────────────────┘            └─────────────────────┘
```

[Fig. 4a]

EP 3 167 358 B1

**401** Initialize region value = 2, connected region value= 0 and go to start of mutual capacitance touch data array

**402** All points in mutual capacitance touch data array checked?
— YES → **403** Exit
— NO ↓

**404** Current node value =1
— NO →
— YES ↓

**405** At least one value around current point in all directions > 1?
— NO → **407** Update connected region value with region value → **408** Increment region value
— YES ↓

**406** Update value of connected region value with greatest node value obtained from surrounding current node

**407** Update value at current point and all points surrounding current point (which are equal to 1) with connected region value

**410** Get next point in data array

[Fig. 4b]

```
                    ┌──────────────────────────────────────┐  411
                    │  INITIALIZE CURRENT REGION VALUE = 2  │
                    └──────────────────────────────────────┘
                                      │
                                      ▼
                          ╱─────────────────────╲  412              413
                         ╱   CURRENT REGION VALUE > ╲    YES    ┌──────────┐
                         ╲   FINAL REGION VALUE?    ╱──────────▶│   EXIT   │
                          ╲─────────────────────╱              └──────────┘
                                      │ NO
                                      ▼
                    ┌──────────────────────────────────────┐  414
                    │      GO TO START OF MC DATA ARRAY     │
                    └──────────────────────────────────────┘
     417                               │
 ┌──────────────┐                      ▼
 │ GET NEXT POINT│            ╱─────────────────────╲  415
 │  DATAARRAY    │   YES     ╱   ALL POINTS IN MC DATA ╲
 └──────────────┘  ◀────────╲   TOUCH ARRAY CHECKED?  ╱
     416                      ╲─────────────────────╱
 ┌──────────────┐                      │ NO
 │ INCREMENT CURRENT│                  ▼
 │  REGION VALUE  │          ╱─────────────────────╲  418
 └──────────────┘    NO     ╱   VALUE AT CURRENT NODE = ╲
                    ◀────────╲   CURRENT REGION VALUE?  ╱
                              ╲─────────────────────╱
                                      │ YES
                                      ▼
                          ╱──────────────────────────╲  419
                    NO   ╱   VALUE AROUND CURRENT       ╲
                   ◀─────╲  NODE IN SURROUNDING 8 DIRECTIONS > 0 AND NOT ╱
                          ╲   EQUAL TO CURRENT VALUE?   ╱
                           ╲──────────────────────────╱
                                      │ YES
                                      ▼
                    ┌──────────────────────────────────────┐  420
                    │ SET ERROR REGION VALUE = VALUE OBTAINED IN PREVIOUS │
                    └──────────────────────────────────────┘
                                      │
                                      ▼
                    ┌──────────────────────────────────────┐  421
                    │ SET ALL POINTS IN DATA ARRAY, WHICH ARE EQUAL │
                    │ TO ERROR REGION VALUE, TO CURRENT REGION VALUE │
                    └──────────────────────────────────────┘
```

[Fig. 5]

## Slant Length Calculation

Left to right width

Right to left width

Height

Height

Width

Width

## Average Angle Calculation

ai
a3
a2
a1

Find angle of each line above threshold and find average of all the angles to obtain angle of the given shape Average angle of shape = $\Sigma \alpha i / n$

## Compactness

Height

Height

- Compactness=Area of bounding box/Area of shape
- Perimeter of shape Perimeter box
- Perimeter / Area of the shape
- Diag.1/Diag.2
- Centroid of shape ●

☐ Minimum area
  Bounding box

◄───► Height

◄──► Width

◄ ─ ─ ► Left right largest slant lenght

◄ ── ► Right to left largest slant lenght

◄----► Line with largest distance
        between two points

[Fig. 6]

[Fig. 7a]

701

NO ← HIGHT/WIDTH = CONSTANT RANGE FIXED FOR FIST?

YES ↓

702

NO ← LEFT TO RIGHT/RIGHT TO LEFT =CONSTANT RANGE FIXED FOR FIST(APPROX.. 1.3 IF LR>RL OR 0.75 IF RL>LR)?

YES ↓

703

NO ← PERIMETER OF SHAPE/PERIMETER OF BOUNDING BOX=CONSTANT RANGE FIXED FOR FIST(APPROX. 0.75)?

YES ↓

704

NO ← $\dfrac{\text{AREA OF BOUNDING BOX}}{\text{AREA COVERED BY HAND SHAPE}}$ LIES IN PREDEFINED RANGE?

YES ↓

705

FIST IDENTIFIED

706

FIST NOT IDENTIFIED

[Fig. 7b]

[Fig. 8a]

```
                                                                         801
                        MAX(RL/LR DIAGONAL, LR/RL DIAGONAL) LIES
   NO  ◄───────         WITHIN THE RANGE FIXED FOR FINGER(APPROX. 2.5)?
                                              │ YES
                                              ▼
                                                                         802
                        BOUNDING BOX LR/RL LIES WITHIN THE  RANGE FIXED
   NO  ◄───────         FOR FINGER(APPROX. 1) RANGE IS [2.4,2.6])?
                                              │ YES
                                              ▼
                                                                         803
                        PERIMETER OF SHAPE/PERIMETER OF BOUNDING BOX
   NO  ◄───────         LIES WITHIN RANGE FIXED FOR FINGER(APPROX. 1)?
                                              │ YES
                                              ▼
                                                                         804
                           AREA OF BOUNDING BOX
   NO  ◄───────        ─────────────────────────── LIES IN PREDEFINED RANGE?
                        AREA COVERED BY HAND SHAPE
                            Approximate RANGE IS [0.7, 0.9]
                                              │ YES
                                              ▼
                                                                    805
                        FINGER IDENTIFIED
```

806

FINGER NOT IDENTIFIED

[Fig. 8b]

[Fig. 9a]

**901** — OBTAIN BOUNDING BOX OF REGION

**902** — FROM TOP LEFT OBTAIN FIRST ENCOUNTERED REGION

**903** — TRAVERSE ALL POINTS OF ENCOUNTERED REGION ALONG WIDTH OF BOUNDING BOX AND STORE ITS LENGTH

**904** — SELECT TO NEXT ROW OF THE BOUNDING BOX

**905** — COUNT THE LENGTH OF PREVIOUSLY ENCOUNTERED REGION IN CURRENT ROW

**906** — DELTA = ABS(PREVIOUSLY STORED LENGTH−CURRENT LENGTH)

**907** — DELTA>THRESHOLD VALUE(IN OUR CASE 4) || ( LENGTH OF ENCOUNTERED REGION IN CURRENT ROW=0)?

YES      NO

**908** — RESET ALL VALUES IN CURRENT ROW TO 0 AND EXIT

[Fig. 9b]

## Finger separation from palm

Operation 1 | Identified finger: 1

Sudden change in width | Operation 2

Identified finger: 2 | Operation 3 | Identified finger: 3 | Operation 4

Sudden change in width

Partial island identified

[Fig. 10]

1001 — SELECT THE OPTION FOR RECORD A SHAPE TO TOUCH FOR RECORDING THE SHAPE

1002 — DATA FOR CONSECUTIVE PREDEFINED NO. OF FRAMES IS SIMILAR?    NO

YES

1003 — PROCESS MUTUAL CAPACITANCE DATA AND PERFORM COMPUTATION

1004 — STORE PARAMETERS FOR CORRESPONDING SHAPES

[Fig. 11]

1101

NO

**NO. OF REGION DETECTED=RECORDED NO. OF REGIONS?**

YES

1102

NO

**ABS(W/LR-RECORDED(W/LR))<Ω ABS(H/LR-RECORDED(H/LR))< Ω ABS(W/RL-RECORDED(W/RL))< Ω ABS(H/RL-RECORDED(H/RL))< Ω Ω IS PREDEFINED RATIO(IN OUR CASE 0.25), ATLEAST 3 CONDITIONS TRUE ?**

YES

1103

NO

**ABS(PERIMETER-RECORDED PERIMETER)< PREDEFINED VALUE(APPROX. 10) FOR CORRESPONDING SHAPE?**

YES

1104

NO

**ABS(RECORDED ANGLE-CURRENT ANGLE)<PREDEFINED ANGLE (APPROX. 20) FOR CORRESPONDING SHAPE?**

YES

1105

NO

**ABS(CENTROID GAP – RECORDED CENTROID GAP)< PREDEFINED VALUE(IN OUR CASE 1)?**

YES

1106

**SHAPE MATCHED**

1107

**SHAPE NOT MATCHED**

[Fig. 12a]

**Camera launch Using single
Finger shape Recognition**

After N Sec

[Fig. 12b]

```
                        ┌────────────────────────────┐  1201
                        │   Single finger identified  │
                        └────────────────────────────┘
                                      │
          ┌───────────────────────────┘
          ▼
┌──────────────────────────┐ 1202      ┌──────────────────────────┐ 1208
│   Check centroid present │ ────────▶ │   Check centroid present │
│ in left half and bottom half│        │ in RIGHT half and bottom half│
└──────────────────────────┘           └──────────────────────────┘
          │                                        │
          ▼                                        ▼
┌──────────────────────────┐ 1203      ┌──────────────────────────┐ 1209
│   Define the orientation │           │   Define the orientation │
│    as 3 (270 degrees)    │           │    as 1 (90 degrees)     │
└──────────────────────────┘           └──────────────────────────┘
          │                                        │
          ▼                                        ▼
    ◇ LR diagonal > RL diagonal? ◇ 1204      ◇ RL diagonal > LR diagonal? ◇ 1210
NO ─┤                          │             │                          ├─ NO
    │        YES ▼                                    YES ▼
    │     ◇ 30>average>0? ◇ 1205                  ◇ 30>average>0? ◇ 1211
NO ─┤                │                                │                  ├─ NO
    │       YES ▼                                  YES ▼
    │   ◇ Centroid < width/3? ◇ 1206           ◇ Centroid < 2*width/3 ? ◇ 1212
NO ─┤                  YES                          YES                  ├─ NO
    │                    └──────────┬──────────────┘
    │                               ▼
    │              ┌──────────────────────────┐ 1207
    │              │   Camera shape identified │
    │              └──────────────────────────┘
    │                               │
    │                               ▼
    │              ┌──────────────────────────┐ 1213
    └─────────────▶│  Wait until user lifts finger│◀─────────────
                   └──────────────────────────┘
```

[Fig. 13]

Camera Launch Using two
Finger shape Recognition

After N Sec

[Fig. 14]

```
                                1401                                          1403
      ┌──────────────────────────┐              ┌──────────────────────────────────────┐
      │      Device touched      │              │  Wait for a pre-defined number of frames │
      └──────────────────────────┘              └──────────────────────────────────────┘
                   │                                              ▲
                   ▼          1402                                │
              ◇─────────────◇        NO                           │
              │ Valid touch │─────────────────────────────────────┤
              ◇─────────────◇                                     │
                   │ YES      1404                                │
                   ▼                                              │
      ┌──────────────────────────┐                               │
      │      Store input data    │                               │
      └──────────────────────────┘                               │
                   │          1405                                │
                   ▼                                              │
              ◇─────────────◇        NO                           │
              │Gesture completed│────────────────────────────────┘
              ◇─────────────◇
                   │ YES      1406
                   ▼
      ┌──────────────────────────┐
      │    Perform computation   │
      └──────────────────────────┘
                   │          1407
                   ▼
              ◇──────────────────◇    NO
              │Computed data is valid│──────────────────────────┐
              ◇──────────────────◇
                   │ YES      1408
                   ▼
      ┌──────────────────────────┐
      │       Match found        │
      └──────────────────────────┘
                   │          1409
                   ▼
      ┌──────────────────────────────┐
      │ Enable corresponding touch action │
      └──────────────────────────────┘
```

[Fig. 15]

EP 3 167 358 B1

Input next point — 1501

1511 Determine whether there are remaining points to be processed? — YES

NO

1512 Compute directions

1502 Number of points processed == 0 — YES

1503 Add current point Previous 2 points = current pt. Start of edge = current pt.

NO

1504 Previous 2 points are same ? — NO

1505 Update previous points

YES

1506 Compute angle between previous 2 edges formed by current point and previous 2 verticles

1507 Is angle less than a threshold value? — NO

1508 Replace previous point with current point

YES

1509 Is length of current edge less than a threshold? — NO

YES

1510 New edge added from start of edge to current point Start of edge = current pt

[Fig. 16a]

[Fig. 16b]

[Fig. 17a]

EP 3 167 358 B1

USER STARTS MAKING A GESTURE — 1701

1702
IS USER MOVING FINGER ON SCREEN FOR MAKING A GESTURE?

NO

YES

1703
IS BEGINNING OF GESTURE?

YES → ADD COORDINATES TO ARRAY OF COORDINATES — 1707

NO

1708
IS DISTANCE BETWEEN CURRENT COORDINATES AND LAST COORDINATES IN THE ARRAY GREATER THAN OR EQUAL TO THRESHOLD DISTANCE?

NO

YES

1704
CALCULATE AND STORE STROKE LENGTH

1705
IS TIME LIMIT EXPIRED?

NO

YES

1709
STOP COLLECTING COORDINATES AND PROCEED WITH PROCESSING OF COLLECTED COORDINATES

1706
HAS USER MADE A NEW STROKE?

NO

YES

[Fig. 17b]

```
                        ┌──────────────────────────────┐  1710
                        │   THE GESTURE COMPLETED AND   │
                        │   COORDINATES ARE COLLECTED   │
                        └──────────────┬───────────────┘
                                       │
                        ┌──────────────▼───────────────┐  1711
                        │  SAMPLE THE COLLECTED COORDINATES  │
                        └──────────────┬───────────────┘
                                       │
                        ┌──────────────▼───────────────┐  1712
                        │  CALCULATE CENTROID OF SAMPLED COORDINATES  │
                        └──────────────┬───────────────┘
                                       │
                                    1713
             YES              ◆ IS GESTURE MATCHING ◆        NO
        ┌─────────────────────  ORIENTATION INVARIANT?  ─────────────────┐
        │                                                                │
        ▼ 1714                                                           ▼ 1717
┌────────────────────────┐                          ┌──────────────────────────────┐
│ CALCULATE ORIENTATION  │                          │  TRANSLATE THE SAMPLED COORDINATES │
│  ANGLE OF SAMPLED      │                          │  BY KEEPING CENTROID AS ORIGIN │
│    COORDINATS          │                          └──────────────┬───────────────┘
└───────────┬────────────┘                                         │
            │ 1715                                                  │
┌───────────▼────────────┐                                         │
│ TRANSLATE THE SAMPLED  │                                         │
│ COORDINATES BY KEEPING │                                         │
│  CENTROID AS ORIGIN    │                                         │
└───────────┬────────────┘                                         │
            │ 1716                                                 │
┌───────────▼────────────┐                                        │
│ ROTATE THE TRANSLATED  │                                        │
│ COORDINATES AROUND     │                                        │
│ ORIGIN BY COMPUTED ANGLE│                                       │
└───────────┬────────────┘                                       │
            │                1718                                 │
            │      ┌──────────────────────────────┐              │
            └─────►│  SEND PROCESSED COORDINATES TO │◄─────────────┘
                   │ APPLICATION PROCESSOR FOR RECORDING │
                   └──────────────────────────────┘
```

[Fig. 17c]

1721

Processed coordinates data obtained for current gesture

1722

Processed coordinates are normalized. Normalized data is used for matching against recorded or predefined gestures. Scores are generated using minimum cosine distance logic. Current gesture is matched with recorded or predefined gestures and score is generated for each match

1728

Match not found

1723

Is no score generated?
This will happen if stroke counts check fails?

NO

YES

1724

Is the best score greater than or equal to minimum score for matching?

NO

YES

1725

If the gesture contains dots then are the dots drawn in correct order? For e.g. dot in 'i' or 'j'?

NO

YES

1726

Is the difference between perimeter/length ratio of current gesture and best matched gesture is within the limit?

NO

YES

1727

Match found

[Fig. 18a]

```
                                                    1801
              ┌──────────────────────────────────────┐
              │   Extract touch data and pressure data │
              └──────────────────────────────────────┘
                                  │
                                  ▼                 1802
              ┌──────────────────────────────────────┐
              │   Calculate direction using touch data │
              └──────────────────────────────────────┘
                                  │
                                  ▼                 1803
              ┌──────────────────────────────────────┐
              │       Store the pressure counts and    │
              │         corresponding vertex           │
              └──────────────────────────────────────┘
                                  │
                                  ▼                 1804
              ┌──────────────────────────────────────┐
              │       Find relevant pressure peaks     │
              │          using the pressure data       │
              └──────────────────────────────────────┘
                                  │
                                  ▼                 1805
      NO                ◇─────────────────────◇
    ◄─────────────       │   If the finger lifted?   │
                         ◇─────────────────────◇
                                  │ YES
                                  ▼                 1806
              ┌──────────────────────────────────────┐
              │         Calculate direction vertex     │
              └──────────────────────────────────────┘
                                  │
                                  ▼                 1807
              ┌──────────────────────────────────────┐
              │ Compare direction vertex with pressure vertex, │
              │   if matched save the pressure count for │
              │          that particular vertex        │
              └──────────────────────────────────────┘
```

[Fig. 18b]

```
                        1808
        ╱────────────────────╲           NO
       ╱  Are Number of directions same ? ╲──────────────┐
        ╲────────────────────╱                           │
                 │ YES                                    │
                 │         1809                           │
        ╱────────────────────╲           NO               │
       ╱   Are Direction values same ?   ╲───────────────┤
        ╲────────────────────╱                           │
                 │ YES        1810                        │
                 │                                  1812  │
        ╱────────────────────╲     NO      ┌──────────────▼──────────────┐
       ╱   Is pressure count same ?  ╲─────▶│        Match failed         │
        ╲────────────────────╱             └─────────────────────────────┘
                 │ YES
                 │            1811
        ┌────────▼────────────┐
        │    Match success     │
        └─────────────────────┘
```

[Fig. 19]

```
                                                          1901
┌──────────────────────────────────────────────────────────────┐
│ PROCESS DATA IN TSP IC AND SEND PROCESSED DATA TO APPLICATION PROCESSOR │
└──────────────────────────────────────────────────────────────┘
                              │                           1902
┌──────────────────────────────────────────────────────────────┐
│              PERFORM THE GESTURE MULTIPLE TIMES                │
└──────────────────────────────────────────────────────────────┘
                              │                           1903
            ╱─────────────────────────────────────╲
   YES     ╱  DOES CURRENT GESTURE MATCH            ╲
  ┌────────   WITH AN ALREADY RECORDED GESTURE OR IS CURRENT GESTURE MUCH
  │         ╲  DIFFERENT THAN PREVIOUS TRIALS OF THIS ╱
  │          ╲           GESTURE?                    ╱
  │            ╲─────────────────────────────────────╱
  │                          │ NO                     1904
  │         ┌──────────────────────────────────────────────────────┐
  │         │ GESTURE IS ASSIGNED AN ID, NAME, AND IT IS STORED IN A PERSISTENT STORAGE │
  │         └──────────────────────────────────────────────────────┘
  │  1905
  ▼
┌──────────────────────────────┐
│     GESTURE IS DISCARDED      │
└──────────────────────────────┘
```

[Fig. 20]

## Camera launch Using single Finger shape Recognition

After N Sec

[Fig. 21a]

## Camera Launch Using two Finger shape Recognition

After N Sec

[Fig. 21b]

```
┌──────────────────────────────────────────┐
│ If camera SHAPE identified store centroid C1 │  2101
└──────────────────────────────────────────┘
                    │
                    ▼
┌──────────────────────────────────────────┐
│       Track the centroid of the finger      │  2102
│        shape and update centroid c2         │
└──────────────────────────────────────────┘
                    │
                    ▼
┌──────────────────────────────────────────┐
│  If (c1-c2) > 3 electrodes increase the time │  2103
│            counter of holding              │
└──────────────────────────────────────────┘
                    │
                    ▼
         ◇ If c2>width/2 & Final angle>60? ◇    2104
              NO ────┘         │
                              YES
                               ▼
         ◇ If time counter for holding >10? ◇    2105
                        │       └──── NO ────┐
                       YES                   ▼
                        │        ┌──────────────────────────────────────────┐
                        │        │      No shape identified erase c1       │  2106
                        │        │  and start camera SHAPE detection again  │
                        │        └──────────────────────────────────────────┘
                        ▼
         ◇ If sliding time < 2 sec? ◇    2107
            NO ────┘       │
                          YES
                           ▼
┌──────────────────────────────────────────┐
│               Launch camera              │  2108
└──────────────────────────────────────────┘
```

[Fig. 22]

CASE 1

CASE 2

CASE 3

CASE 4

CASE 5

CASE 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100211920A1 A